# EUROPEAN PATENT APPLICATION

(11) **EP 4 712 561 A1**
(43) Date of publication of application: **18.03.2026**
(21) Application number: 24814137.6
(22) Date of filing: 09.05.2024
(51) Int. Cl.: H04W 36/00, H04W 24/10, H04W 28/06

(54) **COMMUNICATION METHOD, APPARATUS, AND SYSTEM**

(30) Priority: 31.05.2023 CN 202310639313
(71) Applicant: Huawei Technologies Co., Ltd., Shenzhen, Guangdong 518129 (CN)
(72) Inventor: LU, Rui, Shenzhen, Guangdong 518129 (CN); GENG, Tingting, Shenzhen, Guangdong 518129 (CN); CHEN, Jun, Shenzhen, Guangdong 518129 (CN)
(74) Representative: Epping - Hermann - Fischer
(86) International application number: PCT/CN2024/092058
(87) International publication number: WO 2024/244936

(57) **Abstract**

This application relates to the field of communication technologies, and discloses a communication method, apparatus, and system. The method includes: A terminal determines predicted values of first-type measurement quantities of a plurality of cells at at least one time point in a first time period, where the plurality of cells include a serving cell and a candidate cell; and if the predicted values of the first-type measurement quantities of the plurality of cells at the at least one time point satisfy a reporting condition, sends measurement report information to a network device. According to the foregoing method, the terminal may perform measurement reporting evaluation based on the predicted values of the first-type measurement quantities of the plurality of cells at the at least one time point. In this way, the terminal does not need to perform actual measurement at the at least one time point, so that a measurement reporting process can be accelerated, and this helps reduce a handover exception caused by improper parameter configuration corresponding to a measurement event.

## Description

### CROSS-REFERENCE TO RELATED APPLICATION

This application claims priority to Chinese Patent Application No. 202310639313.0, filed with the China National Intellectual Property Administration on May 31, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

Cell handover is a very important feature in a communication system, and is mainly triggered by movement of a terminal when the terminal is in a connected state, so that the terminal is handed over to a neighboring cell with better signal quality before signal quality of a serving cell becomes unavailable for communication, to provide a continuous and uninterrupted communication service.

In an existing handover procedure, handover preparation and decision-making are usually performed based on a measurement event. To be specific, when performing measurement configuration on a terminal, a network device configures a parameter corresponding to a measurement event, so that the terminal performs measurement on a serving cell and a candidate cell, and performs measurement reporting evaluation based on the parameter corresponding to the measurement event.

However, because the parameter corresponding to the measurement event is usually configured according to experience, the parameter corresponding to the measurement event may not adapt to a current channel condition, resulting in a handover exception.

### SUMMARY

This application provides a communication method, apparatus, and system, to implement measurement reporting evaluation based on a predicted value, so as to accelerate a measurement reporting process, and reduce a handover exception caused by improper parameter configuration corresponding to a measurement event.

**According to a first aspect,** an embodiment of this application provides a communication method. The method may be applied to a terminal or a module (for example, a chip or a circuit) in the terminal. An example in which the method is applied to the terminal is used. In the method, the terminal determines predicted values of first-type measurement quantities of a plurality of cells at at least one time point in a first time period, where the plurality of cells include a serving cell and a candidate cell; and if the predicted values of the first-type measurement quantities of the plurality of cells at the at least one time point satisfy a reporting condition, sends measurement report information to a network device.

According to the foregoing method, the terminal may perform measurement reporting evaluation based on the predicted values of the first-type measurement quantities of the plurality of cells at the at least one time point. In this way, the terminal does not need to perform actual measurement at the at least one time point, so that a measurement reporting process can be accelerated, and this helps reduce a handover exception caused by improper parameter configuration corresponding to a measurement event.

In a possible design, the method further includes: receiving first information from the network device, where the first information indicates to determine, based on the predicted values of the first-type measurement quantities of the plurality of cells, whether to trigger sending of the measurement report information.

In this way, the network device indicates, to the terminal, whether to perform measurement reporting evaluation based on the predicted values, so that the network device flexibly manages and controls the terminal.

In a possible design, determining the predicted values of the first-type measurement quantities of the plurality of cells at the at least one time point includes: obtaining the predicted values of the first-type measurement quantities of the plurality of cells at the at least one time point based on an output of a prediction model, where an input of the prediction model includes historical measurement values of second-type measurement quantities of the plurality of cells, and the output of the prediction model includes predicted values of the second-type measurement quantities of the plurality of cells at the at least one time point; an input of the prediction model includes historical measurement values of second-type measurement quantities of the plurality of cells, and the output of the prediction model includes the predicted values of the first-type measurement quantities of the plurality of cells at the at least one time point; or an input of the prediction model includes historical measurement values of the first-type measurement quantities of the plurality of cells, and the output of the prediction model includes the predicted values of the first-type measurement quantities of the plurality of cells at the at least one time point.

In this way, there may be a plurality of possibilities for the input and the output of the prediction model, so that implementation is flexible.

In a possible design, the first-type measurement quantity is a layer 3 measurement quantity, and the second-type measurement quantity is a layer 1 measurement quantity.

In a possible design, the method further includes: receiving second information and/or third information from the network device, where the second information indicates a type of a measurement quantity corresponding to the input of the prediction model and/or a type of a measurement quantity corresponding to the output of the prediction model; and the third information is for selecting the prediction model from a plurality of models of the terminal.

In a possible design, the measurement report information includes at least one of the following: the predicted values of the first-type measurement quantities of the plurality of cells at the at least one time point; an average predicted value, a maximum predicted value, or a minimum predicted value of the predicted values of the first-type measurement quantities of the plurality of cells at the at least one time point; the predicted values of the second-type measurement quantities of the plurality of cells at the at least one time point; an average predicted value, a maximum predicted value, or a minimum predicted value of the predicted values of the second-type measurement quantities of the plurality of cells at the at least one time point; and an identifier of at least one candidate cell. In this way, measurement reporting overheads are reduced.

In a possible design, the method further includes: receiving fourth information from the network device, where the fourth information indicates content included in the measurement report information.

In this way, the network device specifically indicates, to the terminal, the content (or an indication reporting manner) included in the measurement report information, so that the network device manages and controls the terminal.

In a possible design, determining the predicted values of the first-type measurement quantities of the plurality of cells at the at least one time point in the first time period includes: obtaining, through measurement, measurement values of the first-type measurement quantities of the plurality of cells at a first time point; and if the measurement values of the first-type measurement quantities of the plurality of cells at the first time point satisfy an entry condition, determining the predicted values of the first-type measurement quantities of the plurality of cells at the at least one time point, where the first time point is before a 1^{st} time point in the at least one time point.

In a possible design, determining the predicted values of the first-type measurement quantities of the plurality of cells at the at least one time point in the first time period includes: determining, at a second time point, the predicted values of the first-type measurement quantities of the plurality of cells at the at least one time point, where the second time point is a time point at which measurement is performed on the first-type measurement quantities or the second-type measurement quantities of the plurality of cells, and the second time point is before a 1^{st} time point in the at least one time point.

In this way, the terminal starts prediction at a measurement time point, so that a selection range of a target cell can be expanded, and this helps select an optimal target cell.

In a possible design, the method further includes: receiving fifth information from the network device, where the fifth information indicates the at least one time point.

In a possible design, the method further includes: receiving sixth information and seventh information from the network device, where the sixth information indicates at least one candidate cell for cell handover, and the seventh information indicates to determine, based on predicted values of first-type measurement quantities of the serving cell and the at least one candidate cell at at least one time point in a second time period, whether to perform cell handover.

**According to a second aspect,** an embodiment of this application provides a communication method. The method may be applied to a network device or a chip in the network device. An example in which the method is applied to the network device is used. In the method, the network device sends first information to a terminal, where the first information indicates to determine, based on predicted values of first-type measurement quantities of a plurality of cells at at least one time point in a first time period, whether to trigger sending of measurement report information; and receives the measurement report information from the terminal.

In a possible design, the method further includes: sending second information and/or third information to the terminal, where the second information indicates a type of a measurement quantity corresponding to an input of a prediction model and/or a type of a measurement quantity corresponding to an output of the prediction model, and the third information is for selecting the prediction model from a plurality of models of the terminal; and the prediction model is for determining the predicted values of the first-type measurement quantities of the plurality of cells at the at least one time point in the first time period.

In a possible design, the input of the prediction model includes historical measurement values of second-type measurement quantities of the plurality of cells, and the output of the prediction model includes predicted values of the second-type measurement quantities of the plurality of cells at the at least one time point; the input of the prediction model includes historical measurement values of second-type measurement quantities of the plurality of cells, and the output of the prediction model includes the predicted values of the first-type measurement quantities of the plurality of cells at the at least one time point; or the input of the prediction model includes historical measurement values of the first-type measurement quantities of the plurality of cells, and the output of the prediction model includes the predicted values of the first-type measurement quantities of the plurality of cells at the at least one time point.

In a possible design, the first-type measurement quantity is a layer 3 measurement quantity, and the second-type measurement quantity is a layer 1 measurement quantity.

In a possible design, the measurement report information includes at least one of the following: the predicted values of the first-type measurement quantities of the plurality of cells at the at least one time point; an average predicted value, a maximum predicted value, or a minimum predicted value of the predicted values of the first-type measurement quantities of the plurality of cells at the at least one time point; the predicted values of the second-type measurement quantities of the plurality of cells at the at least one time point; an average predicted value, a maximum predicted value, or a minimum predicted value of the predicted values of the second-type measurement quantities of the plurality of cells at the at least one time point; and an identifier of at least one candidate cell.

In a possible design, the method further includes: sending fourth information to the terminal, where the fourth information indicates content included in the measurement report information.

In a possible design, the method further includes: sending fifth information to the terminal, where the fifth information indicates the at least one time point.

In a possible design, the method further includes: sending sixth information and seventh information to the terminal, where the sixth information indicates at least one candidate cell for cell handover, and the seventh information indicates to determine, based on predicted values of first-type measurement quantities or second-type measurement quantities of the serving cell and the at least one candidate cell at at least one time point in a second time period, whether to perform cell handover.

It may be understood that the method claimed in the second aspect corresponds to that in the first aspect. For beneficial effects of related technical features in the second aspect, refer to the descriptions of the first aspect. Details are not described again.

**According to a third aspect,** an embodiment of this application provides a communication method. The method may be applied to a terminal or a module (for example, a chip or a circuit) in the terminal. An example in which the method is applied to the terminal is used. In the method, the terminal determines predicted values of first-type measurement quantities of a plurality of cells at at least one time point in a second time period, where the plurality of cells include a serving cell and at least one candidate cell for conditional handover CHO; determines, based on the predicted values of the first-type measurement quantities of the plurality of cells at the at least one time point, the candidate cell as a target cell for the CHO; and performs handover to the target cell.

According to the foregoing method, the terminal may determine the predicted values of the first-type measurement quantities of the plurality of cells at the at least one time point, and perform CHO evaluation based on the predicted values of the first-type measurement quantities of the plurality of cells at the at least one time point. In this way, the terminal does not need to perform actual measurement at the at least one time point, so that a CHO process can be accelerated, and a CHO delay can be reduced, and this helps reduce a handover exception caused by improper parameter configuration corresponding to CHO.

In a possible design, the method further includes: receiving sixth information from a network device, where the sixth information indicates the at least one candidate cell.

In a possible design, the method further includes: receiving seventh information from the network device, where the seventh information indicates to determine, based on the predicted values of the first-type measurement quantities of the plurality of cells at the at least one time point, whether to perform CHO.

In a possible design, determining the predicted values of the first-type measurement quantities of the plurality of cells at the at least one time point includes: obtaining the predicted values of the first-type measurement quantities of the plurality of cells at the at least one time point based on an output of a prediction model, where an input of the prediction model includes historical measurement values of second-type measurement quantities of the plurality of cells, and the output of the prediction model includes predicted values of the second-type measurement quantities of the plurality of cells at the at least one time point; an input of the prediction model includes historical measurement values of second-type measurement quantities of the plurality of cells, and the output of the prediction model includes the predicted values of the first-type measurement quantities of the plurality of cells at the at least one time point; or an input of the prediction model includes historical measurement values of the first-type measurement quantities of the plurality of cells, and the output of the prediction model includes the predicted values of the first-type measurement quantities of the plurality of cells at the at least one time point.

In a possible design, the method further includes: receiving eighth information and/or ninth information from the network device, where the eighth information indicates a type of a measurement quantity corresponding to the input of the prediction model and/or a type of a measurement quantity corresponding to the output of the prediction model; and the ninth information is for selecting the prediction model from a plurality of models of the terminal.

In a possible design, determining the predicted values of the first-type measurement quantities of the plurality of cells at the at least one time point in the second time period includes: obtaining, through measurement, measurement values of the first-type measurement quantities of the plurality of cells at a third time point; and if the measurement values of the first-type measurement quantities of the plurality of cells at the third time point satisfy an entry condition, determining the predicted values of the first-type measurement quantities of the plurality of cells at the at least one time point, where the third time point is before a 1^{st} time point in the at least one time point.

In a possible design, determining the predicted values of the first-type measurement quantities of the plurality of cells at the at least one time point in the second time period includes: determining, at a fourth time point, the predicted values of the first-type measurement quantities of the plurality of cells at the at least one time point, where the fourth time point is a time point at which measurement is performed on the first-type measurement quantities or the second-type measurement quantities of the plurality of cells, and the fourth time point is before a 1^{st} time point in the at least one time point.

In a possible design, the method further includes: receiving tenth information from the network device, where the tenth information indicates the at least one time point.

**According to a fourth aspect,** an embodiment of this application provides a communication method. The method may be applied to a network device or a chip in the network device. An example in which the method is applied to the network device is used. In the method, the network device determines at least one candidate cell for CHO; and sends sixth information and seventh information to a terminal, where the sixth information indicates the at least one candidate cell, the seventh information indicates to determine, based on predicted values of first-type measurement quantities of a plurality of cells at at least one time point in a second time period, whether to perform CHO, and the plurality of cells include a serving cell and the at least one candidate cell.

In a possible design, the method further includes: sending eighth information and/or ninth information to the terminal, where the eighth information indicates a type of a measurement quantity corresponding to an input of a prediction model and/or a type of a measurement quantity corresponding to an output of the prediction model, and the ninth information is for selecting the prediction model from a plurality of models of the terminal; and the prediction model is for determining the predicted values of the first-type measurement quantities of the plurality of cells at the at least one time point in the second time period.

In a possible design, the method further includes: sending tenth information to the terminal, where the tenth information indicates the at least one time point.

**According to a fifth aspect,** this application provides a communication apparatus. The communication apparatus has a function of implementing the first aspect to the fourth aspect. For example, the communication apparatus includes a corresponding module, unit, or means for performing operations in the first aspect to the fourth aspect. The function, the unit, or the means may be implemented by software, may be implemented by hardware, or may be implemented by hardware executing corresponding software.

In a possible design, the communication apparatus includes a processing unit and a communication unit. The communication unit may be configured to send and receive a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to operations in the first aspect to the fourth aspect.

In a possible design, the communication apparatus includes a processor, and the processor may be configured to be coupled to a memory. The memory may store a necessary computer program or necessary instructions for implementing functions in the first aspect to the fourth aspect. The processor may execute the computer program or the instructions stored in the memory. When the computer program or the instructions are executed, the communication apparatus is caused to implement the method according to any possible design or implementation of the first aspect to the fourth aspect.

In a possible design, the communication apparatus includes a processor and a memory, and the memory may store a necessary computer program or necessary instructions for implementing functions in the first aspect to the fourth aspect. The processor may execute the computer program or the instructions stored in the memory. When the computer program or the instructions are executed, the communication apparatus is caused to implement the method according to any possible design or implementation of the first aspect to the fourth aspect.

In a possible design, the communication apparatus includes a processor and an interface circuit. The processor is configured to: communicate with another apparatus through the interface circuit, and perform the method according to any possible design or implementation of the first aspect to the fourth aspect.

It may be understood that, in the fifth aspect, the processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a sixth aspect,** this application provides a communication system. The communication system may include a terminal and a network device. The terminal is configured to perform the method according to the first aspect, and the network device is configured to perform the method according to the second aspect. Alternatively, the terminal is configured to perform the method according to the third aspect, and the network device is configured to perform the method according to the fourth aspect.

**According to a seventh aspect,** this application provides a computer-readable storage medium. The computer storage medium stores computer-readable instructions. When a computer reads and executes the computer-readable instructions, a computer is caused to perform the method according to any possible design of the first aspect to the fourth aspect.

**According to an eighth aspect,** this application provides a computer program product. When a computer reads and executes the computer program product, the computer is caused to perform the method according to any possible design of the first aspect to the fourth aspect.

**According to a ninth aspect,** this application provides a chip. The chip includes a processor. The processor is coupled to a memory, and is configured to read and execute a software program stored in the memory, to implement the method according to any possible design of the first aspect to the fourth aspect.

### BRIEF DESCRIPTION OF DRAWINGS

FIG. 1 is a diagram of a communication system applicable to an embodiment of this application;
FIG. 2 is a diagram of an NR measurement model according to an embodiment of this application;
FIG. 3A is a schematic flowchart corresponding to common handover according to an embodiment of this application;
FIG. 3B is a diagram of a measurement reporting process of an A3 event according to an embodiment of this application;
FIG. 4 is a schematic flowchart corresponding to CHO according to an embodiment of this application;
FIG. 5 is a schematic flowchart corresponding to LTM according to an embodiment of this application;
FIG. 6 is a diagram of channel condition changes of different cells according to an embodiment of this application;
FIG. 7 is a diagram of an input and an output of a prediction model according to an embodiment of this application;
FIG. 8 is a schematic flowchart corresponding to a communication method according to Embodiment 1 of this application;
FIG. 9 is a schematic flowchart corresponding to a communication method according to Embodiment 2 of this application;
FIG. 10 is a schematic flowchart corresponding to a communication method according to Embodiment 3 of this application;
FIG. 11 is a block diagram of a possible example of an apparatus according to an embodiment of this application;
FIG. 12 is a diagram of a structure of a network device according to an embodiment of this application; and
FIG. 13 is a diagram of a structure of a terminal according to an embodiment of this application.

### DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

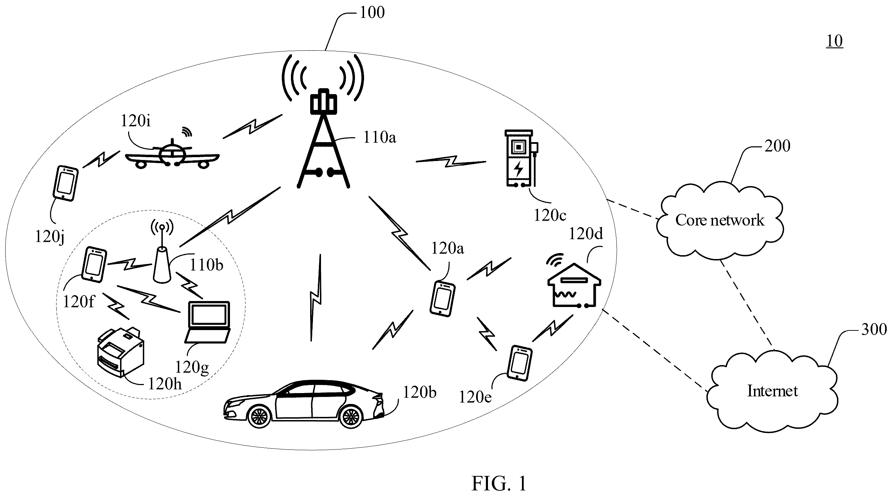

For ease of understanding embodiments of this application, FIG. 1 is a diagram of a possible and non-limiting communication system. As shown in FIG. 1, the communication system 10 includes a radio access network (radio access network, RAN) 100. Optionally, the communication system 10 further includes a core network (core network, CN) 200 and an internet 300. The following mainly describes the RAN 100 in embodiments of this application.

The RAN 100 includes at least one RAN node (for example, 110a and 110b in FIG. 1, collectively referred to as 110) and at least one terminal (for example, 120a to 120j in FIG. 1, collectively referred to as 120). 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices respectively, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

### (1) RAN node

The RAN node 110 may also be sometimes referred to as a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

The RAN node may also be expressed differently, for example, a network device. In this application, unless otherwise specified, the network device is used for description.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The network device may be a macro base station (for example, 110a in FIG. 1), a micro base station or an indoor station (for example, 110b in FIG. 1), a relay node or a donor node, or a radio controller in a CRAN scenario. Optionally, the network device may alternatively be a server, a wearable device, a vehicle, a vehicle-mounted device, or the like. For example, a network device in a vehicle-to-everything (vehicle-to-everything, V2X) technology may be a road side unit (road side unit, RSU). All or some of functions of the network device in this application may alternatively be implemented by a software function running on hardware, or may be implemented by a virtualization function instantiated on a platform (for example, a cloud platform). The network device in this application may alternatively be a logical node, a logical module, or software that can implement all or some functions of the network device.

In another possible scenario, a plurality of network devices collaborate to assist the terminal in implementing radio access, and different network devices respectively implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (the CU-CP or the CU-UP), the DU, and the RU in this application may be implemented by using a software module, a hardware module, or a combination of a software module and a hardware module.

### (2) Terminal

The terminal may be a terminal that accesses the communication system and that has a wireless transceiver function, or may be a chip or a chip system that may be disposed in the terminal. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal. A device form of the terminal is not limited in embodiments of this application.

### (3) Communication between a terminal and a network device

The communication between the terminal and the network device complies with a specific protocol layer structure. For example, the protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. In a 3rd generation partnership project (3rd generation partnership project, 3GPP) standard, a layer 1 (layer 1, L1) may be a PHY layer, a layer 2 may be a MAC layer, and a layer 3 may be an RRC layer. For detailed descriptions of the foregoing protocol layers, refer to related technical specifications of a 3rd generation partnership project (3rd generation partnership project, 3GPP).

Division may be performed on processing functions of the CU and the DU based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of protocol layers. This is not limited in embodiments of this application.

In embodiments of this application, "sending information to (the terminal)" may be understood as that a destination end of the information is the terminal, and may include directly or indirectly sending information to the terminal; and "receiving information from (the terminal)" may be understood as that a source end of the information is the terminal, and may include directly or indirectly receiving information from the terminal. Information may undergo necessary processing, for example, a format change, between the source end and the destination end for information sending. However, the destination end may understand valid information from the source end. A similar expression in this application may be understood similarly, and details are not described herein again.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of a network architecture and emergence of a new service scenario, the technical solutions provided in embodiments of this application are also applicable to similar technical problems.

The following first describes related technical features in embodiments of this application. It should be noted that these explanations are intended to make embodiments of this application easier to understand, but should not be construed as a limitation to the protection scope claimed in this application.

### (1) Measurement

Measurement performed by a terminal in a connected state is generally used for cell selection in a handover preparation process. A measurement process mainly includes steps such as measurement configuration, measurement execution, and measurement reporting. Specifically, after a network device delivers measurement configuration information to the terminal, the terminal performs measurement and reports measurement report information based on the measurement configuration information. The measurement configuration information may be sent to the terminal through RRC dedicated signaling (for example, an RRC reconfiguration message). The following describes the steps separately.

### (1.1) Measurement configuration

The measurement configuration information delivered by the network device to the terminal may include a measurement object, a measurement reporting configuration, a measurement identifier (that is, a measurement ID), and the like. The following briefly describes the measurement reporting configuration.

The measurement reporting configuration is for configuring a standard for triggering reporting of the measurement report information and a format of the measurement report information. Each measurement reporting configuration has a unique identifier (reportConfigId). Measurement reporting may be triggered by a measurement event. In other words, an event triggers reporting. An event-triggered reporting configuration may include categories and thresholds of various measurement events, duration (time To Trigger, TTT for short) in which an entry condition is satisfied, a type of a reference signal, and the like. Generally, after the entry condition of the measurement event is satisfied, the terminal does not immediately trigger reporting, but triggers measurement reporting only when the entry condition of the measurement event is continuously satisfied within the time to trigger. There may be a plurality of measurement events. Table 1 shows meanings, entry conditions, and leaving conditions of some measurement events.

**Table 1: Meanings, entry conditions, and leaving conditions of measurement events**

| Event | Meaning | Entry condition | Leaving condition |
|---|---|---|---|
| A1 | A serving cell is worse than a threshold. | Ms-Hys>Thresh | Ms+Hys<Thresh |
| A2 | The serving cell is worse than the threshold. | Ms+Hys<Thresh | Ms-Hys>Thresh |
| A3 | A neighboring cell is better than a PCell/PSCell. | Mn+Ofn+Ocn-Hys>Ms+Ofp+Ocp+Off | Mn+Ofn+Ocn+Hys< Ms+Ofp+Ocp+Off |
| A4 | The neighboring cell is better than the threshold. | Mn+Ofn+Ocn-Hys>Thresh | Mn+Ofn+Ocn+Hys< Thresh |
| A5 | The serving cell is worse than a threshold 1, and the neighboring cell is better than a threshold 2. | Ms+Hys<Threshl Mn+Ofn+Ocn-Hys>Thresh2 | Ms-Hys>Thresh1 Mn+Ofn+Ocn+Hys< Thresh2 |
| A6 | The neighboring cell is better than an SCell. | Mn+Ocn-Hys>Ms+Ocs+Off | Mn+Ocn+Hys<Ms+ Ocs+Off |
| B1 | An inter-system neighboring cell is better than the threshold. | Mn+Ofn+Ocn-Hys>Thresh | Mn+Ofn+Ocn+Hys< Thresh |
| B2 | The serving cell is worse than the threshold 1, and the inter-system neighboring cell is better than the threshold 2. | Ms+Hys<Threshl Mn+Ofn+Ocn-Hys>Thresh2 | Ms-Hys>Thresh1 Mn+Ofn+Ocn+Hys< Thresh2 |

Ms and Mn respectively represent a measurement result of a serving cell and a measurement result of a neighboring cell. Hys represents an amplitude hysteresis for a measurement result. TimeToTrigger represents duration in which an event entry condition is continuously satisfied, that is, a time hysteresis. Thresh, Thresh1, and Thresh2 represent thresholds. Ofs and Ofn respectively represent a specific frequency offset of the serving cell and a specific frequency offset of the neighboring cell. Ocs and Ocn respectively represent a cell offset (cell individual offset, CIO) of the serving cell and a cell offset of the neighboring cell. Off represents an offset of a measurement event.

### (1.2) Measurement execution

The terminal may perform measurement based on the measurement configuration information. The measurement performed by the terminal may include measurement on a serving cell of the terminal, and further include measurement on a neighboring cell, for example, measurement on a neighboring cell in a same communication system, or measurement on an inter-system neighboring cell.

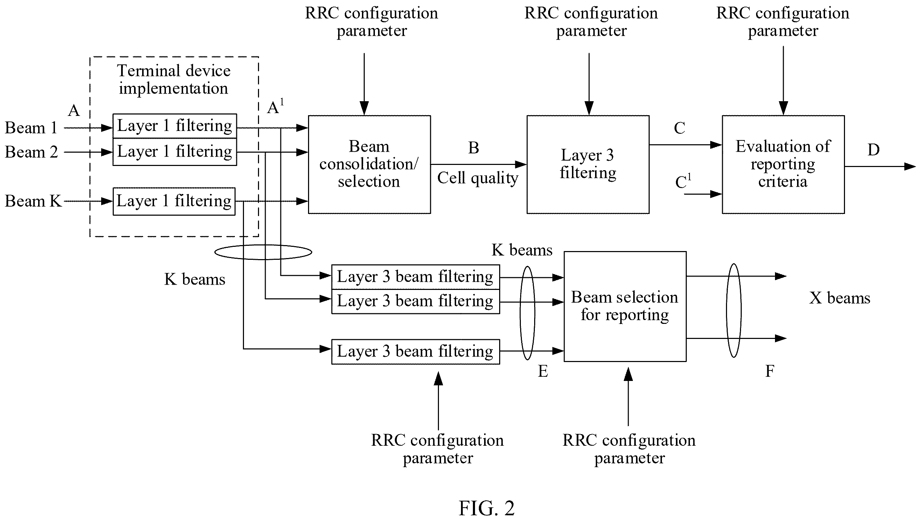

For example, FIG. 2 is a diagram of an NR measurement model. A measurement output of the measurement model includes a measurement value of a beam-level measurement quantity (that is, a beam-level measurement result) and a measurement value of a cell-level measurement quantity (that is, a cell-level measurement result). Specifically, the network device sends reference signals in a plurality of beam directions of a cell. The reference signal may be, for example, a synchronization signal/physical broadcast channel block (synchronization signal/physical broadcast channel block, SSB) or a channel state information reference signal (channel state information reference signal, CSI-RS). Correspondingly, the terminal performs measurement based on a reference signal on a time-frequency resource indicated by the network device. For example, the terminal may obtain, through sampling, signal strengths of beams corresponding to reference signals at a plurality of moments in a time period, and perform weighting on or combine the plurality of obtained signal strengths, to obtain measurement results of the beams (corresponding to a point A in FIG. 2). The measurement result of the beam may also be referred to as beam quality (beam quality). Further, the terminal filters the measurement results of the beams through layer 1 filtering, to obtain measurement results (corresponding to a point A¹ in FIG. 2) that are of the beams and that are obtained through the layer 1 filtering. A parameter of the layer 1 filtering may be configured by the network device for the terminal. Further, a branch 1 and a branch 2 may be included.

In the branch 1, the terminal performs weighting on or combines the measurement results that are of the plurality of beams and that are obtained through the layer 1 filtering, to obtain a measurement result of the cell (corresponding to a point B in FIG. 2). The measurement result of the cell may also be referred to as cell quality (cell quality). In addition, the terminal performs layer 3 filtering on the cell quality to obtain cell quality (corresponding to a point C in FIG. 2) obtained through the layer 3 filtering. The cell quality obtained through the layer 3 filtering may be used for measurement reporting evaluation (and measurement reporting).

In the branch 2, the terminal filters, through layer 3 filtering, the measurement results that are of the beams and that are obtained through the layer 1 filtering, to obtain measurement results (corresponding to a point E in FIG. 2) that are of the beams and that are obtained through the layer 3 filtering, and then selects, based on the measurement results that are of the beams and that are obtained through the layer 3 filtering, reported measurement results that are of X beams and that are obtained through the layer 3 filtering.

### (1.3) Measurement report

The terminal obtains a cell-level measurement result (for example, a cell-level measurement result corresponding to the point C in FIG. 2) through measurement. When the entry condition of the measurement event is satisfied, measurement and measurement reporting evaluation may be performed in the connected state. Further, if the reporting condition of the measurement event is satisfied (for example, the entry condition of the measurement event is always satisfied within time to trigger), the terminal may send the measurement report information to the network device.

The measurement report information may include the measurement identifier, a measurement value (measResultServingMOList) of a measurement quantity of the serving cell, and a measurement value (measResultNeighCells) of a measurement quantity of the neighboring cell. measResultServingMOList includes an identifier of the serving cell, and a measurement value of a cell-level measurement quantity of the serving cell and/or a measurement value of a beam-level measurement quantity of the serving cell. measResultNeighCells includes an identifier of the neighboring cell, and a measurement value of a cell-level measurement quantity of the neighboring cell and/or a measurement value of a beam-level measurement quantity of the neighboring cell.

### (2) Cell handover

The cell handover is a very important feature in a communication system, and is mainly triggered by movement of a terminal when the terminal is in an RRC connected state. For example, a serving cell of the terminal is a cell 1, and if the terminal moves to a cell 2, and signal quality of the cell 2 is better than signal quality of the cell 1, cell handover may be triggered, so that the terminal is handed over from the cell 1 to the cell 2. A basic objective of the cell handover is to hand over a terminal to a neighboring cell with better signal quality before signal quality of a serving cell becomes unavailable for communication, so as to provide a continuous and uninterrupted communication service.

The cell handover may include common handover, conditional handover (conditional handover, CHO), and layer 1/layer 2 triggered mobility (L1/L2 triggered mobility, LTM). The following separately provides detailed descriptions.

### (2.1) Common handover

In the common handover, mobility management of the terminal in the connected state is controlled by a network device. Specifically, the network device sends a handover message to indicate the terminal to be handed over to a specific cell and how to perform handover. Correspondingly, after receiving the handover message, the terminal accesses a target cell based on content included in the handover message.

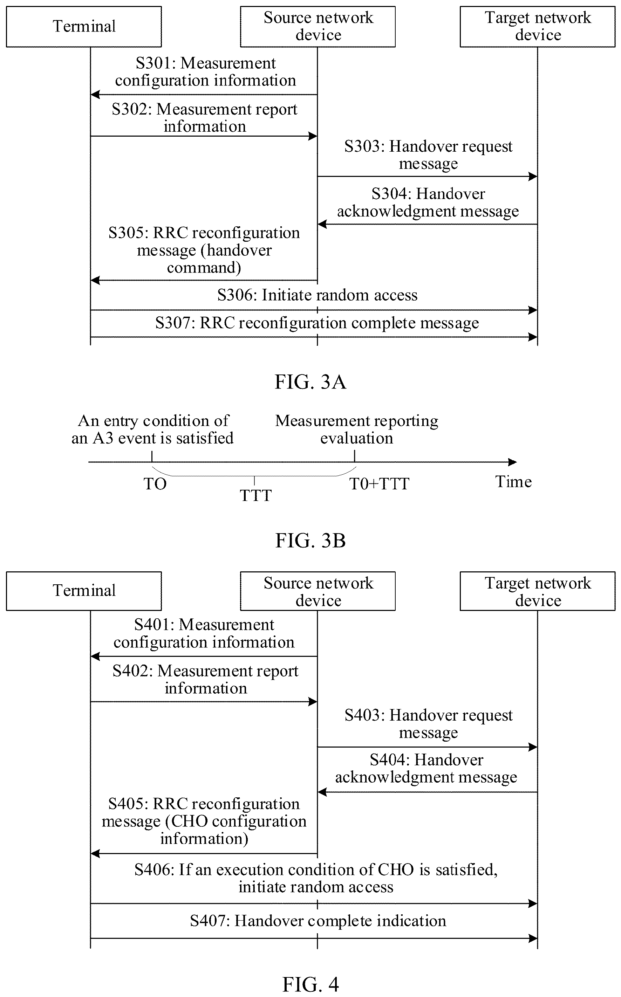

FIG. 3A is a possible schematic flowchart corresponding to common handover. As shown in FIG. 3A, the procedure may include the following steps.

S301: A source network device sends measurement configuration information to a terminal.

Herein, for the measurement configuration information, refer to the descriptions of the measurement configuration in (1.1) described above.

For example, the measurement configuration information includes a parameter corresponding to an A3 event, for example, may include one or more of the following: Hys, Off, and TTT.

S302: The terminal performs measurement on a serving cell and a candidate cell based on the measurement configuration information, and sends measurement report information to the source network device.

For example, refer to FIG. 3B. If determining that cell-level measurement results (for example, the cell-level measurement result corresponding to the point C in FIG. 2) of the serving cell and the candidate cell at a time point T0 satisfy an entry condition of the A3 event, the terminal continues to perform measurement on the serving cell and the candidate cell in a time period of T0 to T0+TTT, and obtains cell-level measurement results of the serving cell and the candidate cell. If determining that the cell-level measurement results of the serving cell and the candidate cell in the time period of T0 to T0+TTT always satisfy the entry condition of the A3 event, the terminal may determine that a reporting condition of the A3 event is satisfied, and send the measurement report information to the source network device.

S303: After receiving the measurement report information, the source network may select a target cell based on the measurement report information, and send a handover request message to a target network device.

S304: The target network device determines whether the terminal is allowed to be handed over, and if a decision result is that the terminal is allowed to be handed over, sends a handover acknowledgment message to the source network device, where the handover acknowledgment message may include configuration information needed by the terminal to access the target cell.

S305: The source network device sends an RRC reconfiguration message (that is, a handover command) to the terminal.

For example, the handover command may include related information about the target cell and the configuration information needed by the terminal to access the target cell, for example, an identifier of the target cell and frequency information corresponding to the target cell, a cell radio network temporary identifier (cell radio network temporary identifier, C-RNTI) allocated by the target cell to the terminal, and random access resource information needed for accessing the target cell.

S306: The terminal initiates random access to the target network device in the target cell based on the handover command.

S307: The terminal sends an RRC reconfiguration complete message to the target network device, to notify the target network device that the handover is completed.

### (2.2) CHO

To avoid that handover cannot be successfully performed because signaling cannot be normally exchanged between the terminal and a source network device due to further deterioration of link quality of the source network device, a CHO mechanism is introduced.

Specifically, when quality of a link between the source network device and the terminal is good, the source network device sends CHO configuration information to the terminal. The configuration information includes an execution condition of the CHO and information about a candidate cell. For example, the information about the candidate cell includes a cell global identifier (cell global identifier, CGI) of the candidate cell or a physical cell identifier (physical cell identifier, PCI) of the candidate cell, and frequency information corresponding to the candidate cell. Correspondingly, after receiving the configuration information, the terminal determines, based on the configuration information, whether the candidate cell satisfies the execution condition of the CHO, and uses a specific candidate cell that satisfies the execution condition as the target cell.

FIG. 4 is a possible schematic flowchart corresponding to CHO. As shown in FIG. 4, the procedure may include the following steps.

S401: A source network device sends measurement configuration information to a terminal, where the measurement configuration information includes parameters such as a measurement object, a reporting configuration, and a measurement identifier.

S402: The terminal performs measurement on a serving cell and a candidate cell based on the measurement configuration information, and sends measurement report information to the source network device.

S403: After receiving the measurement report information, the source network device may select at least one candidate cell based on the measurement report information, and send a handover request message to a candidate network device.

S404: The candidate network device determines whether the terminal is allowed to be handed over, and if a decision result is that the terminal is allowed to be handed over, sends a handover acknowledgment message to the source network device, where the handover acknowledgment message may include configuration information needed by the terminal to access the candidate cell.

Herein, for S401 to S404, refer to the descriptions of S301 to S304.

S405: The source network device sends an RRC reconfiguration message to the terminal.

For example, the RRC reconfiguration message may include related information about the at least one candidate cell and the configuration information needed by the terminal to access the candidate cell, and further include CHO configuration information.

S406: The terminal performs measurement on the serving cell and the at least one candidate cell, if cell-level measurement results of the serving cell and a candidate cell 1 satisfy an execution condition of the CHO, determines the candidate cell 1 as a target cell for the CHO, and initiates random access to a target network device in the target cell.

S407: The terminal sends a handover complete indication to the target network device.

### (2.3) LTM

Generally, a handover procedure is triggered by a layer 3. To be specific, a source network device receives an L3 measurement result (for example, a cell-level measurement result corresponding to a point D in FIG. 2) reported by the terminal, selects a candidate cell based on the L3 measurement result, and sends a handover request to the candidate cell. If accepting the handover request, the candidate cell sends a handover request response to the source network device, where the handover request response carries a related configuration of a target cell. Further, the source network device sends a handover command to the terminal, and the handover command is sent through RRC signaling. After receiving the handover command, the terminal accesses the target cell based on the related configuration of the target cell that is carried in the handover command. For ease of description, the handover procedure may be L3 handover.

To further reduce a handover delay, the LTM is being discussed currently, and the LTM may also be referred to as L1/L2 handover. Similar to L3 handover, for the LTM, a target cell is selected based on an L3 measurement result, a CU performs target cell selection, and LTM handover configuration information is delivered to the terminal through an RRC reconfiguration message. A difference lies in that handover execution is determined by an L1/L2. To be specific, the terminal reports an L1 measurement result (for example, a beam-level measurement result corresponding to a point F in FIG. 2), and a DU makes a handover decision based on the measurement result, and delivers a handover command via a MAC CE. After the handover is completed, the terminal does not delete configuration information of the target cell, and may directly deliver a handover command when the terminal needs to be handed over to a candidate cell next time, so that a handover configuration process is omitted, and a handover delay can be reduced.

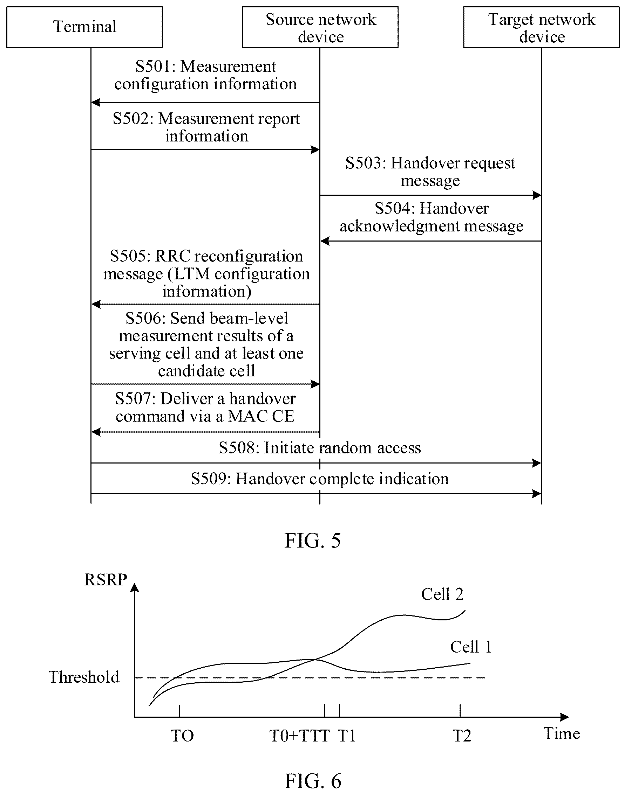

FIG. 5 is a possible schematic flowchart corresponding to LTM. As shown in FIG. 5, the procedure may include the following steps.

S501: A source network device sends measurement configuration information to a terminal, where the measurement configuration information includes parameters such as a measurement object, a reporting configuration, and a measurement identifier.

S502: The terminal performs measurement on a serving cell and a candidate cell based on the measurement configuration information, and sends measurement report information to the source network device.

S503: After receiving the measurement report information, the source network device may select at least one candidate cell based on the measurement report information, and send a handover request message to a candidate network device.

S504: The candidate network device determines whether the terminal is allowed to be handed over, and if a decision result is that the terminal is allowed to be handed over, sends a handover acknowledgment message to the source network device, where the handover acknowledgment message may include configuration information needed by the terminal to access the candidate cell.

Herein, for S501 to S504, refer to the descriptions of S301 to S304.

S505: The source network device sends an RRC reconfiguration message to the terminal.

For example, the RRC reconfiguration message may include related information about the at least one candidate cell and the configuration information needed by the terminal to access the candidate cell, and further include LTM configuration information.

S506: The terminal performs measurement on the serving cell and the at least one candidate cell, and sends beam-level measurement results of the serving cell and the at least one candidate cell to the source network device.

S507: The source network device selects a candidate cell 1 as a target cell based on the beam-level measurement results of the serving cell and the at least one candidate cell, and delivers a handover command via a MAC CE, where the handover command includes an identifier of the target cell.

S508: After receiving the handover command, the terminal initiates random access to a target network device in the target cell.

S509: The terminal sends a handover complete indication to the target network device.

It can be learned from the descriptions of the foregoing related technical features that, in an existing handover procedure, handover preparation and decision are usually performed based on a measurement event. To be specific, when performing measurement configuration on a terminal, a network device configures a parameter corresponding to the measurement event, for example, Hys, Off, and TTT, so that the terminal determines, based on the parameter corresponding to the measurement event, whether an entry condition and a reporting condition of the measurement event are satisfied.

However, the foregoing manners have at least the following two problems.

**Problem 1:** Because a parameter corresponding to a measurement event is usually configured according to experience, the parameter corresponding to the measurement event may not adapt to a current channel condition, resulting in a handover exception, for example, premature/delayed handover or ping-pong handover.

The following uses configuration of the TTT as an example. As shown in FIG. 3B above, at the time point T0, after determining that the cell-level measurement results of the serving cell and the candidate cell satisfy the entry condition of the A3 event, the terminal does not directly start measurement reporting, but continues to perform measurement in the time period of T0 to T0+TTT. If the cell-level measurement results of the serving cell and candidate cell always satisfy the entry condition of the measurement event in the time period of T0 to T0+TTT, the measurement reporting is triggered. A value of the TTT is, for example, 320 ms, and a maximum value of the TTT specified in the existing protocol may be 5120 ms. Therefore, the configuration of the TTT affects whether cell handover can be performed in a timely manner.

For example, if the value of the TTT is excessively large, and a channel condition between the terminal and the source network device deteriorates in the time period of T0 to T0+TTT, the terminal may be disconnected from the source network device before the handover is completed, resulting in delayed handover.

For another example, if the value of TTT is excessively small, the terminal has insufficient time to monitor channel condition stability of the candidate cell in the time period of T0 to T0+TTT, and this may cause premature handover or ping-pong handover.

**Problem 2:** Because the source network device performs target cell selection based on the measurement report information of the terminal, when performing cell selection, the source network device does not consider a channel condition after the terminal is handed over to a target cell. As a result, it may be difficult to select a target cell with an optimal channel condition.

For example, refer to **FIG. 6****.** At a time point T0, if a cell-level measurement result of a cell 1 satisfies an entry condition of an A3 event, but a cell-level measurement result of a cell 2 does not satisfy the entry condition of the A3 event, the terminal continues to perform measurement on the cell 1 (but does not perform measurement on the cell 2) in a time period of T0 to T0+TTT. If the cell-level measurement result of the cell 1 continuously satisfies the entry condition of the A3 event in the time period of T0 to T0+TTT, the terminal may send measurement report information to the network device, where the measurement report information includes the cell-level measurement result of the cell 1. Further, a target cell selected by the network device based on the measurement report information is the cell 1. However, it can be learned from FIG. 6 that, although the cell-level measurement result of the cell 2 at the time point T0 does not satisfy the entry condition of the A3 event, in a time period of T1 to T2, it is clear that a channel condition of the cell 2 is better than a channel condition of the cell 1, in other words, the cell 2 is more suitable for being used as the target cell. In the foregoing manner, the network device uses the cell 1 as the target cell, but cannot use the cell 2 as the target cell. As a result, it may be difficult to select a target cell with an optimal channel condition.

**In view of this,** in embodiments of this application, related implementations of cell handover are studied. For example, in embodiments of this application, a prediction model is introduced, and the prediction model is applied to a measurement process in cell handover, to resolve the foregoing two problems.

The prediction model is for predicting a first-type measurement quantity and/or a second-type measurement quantity of a cell. The first-type measurement quantity may be a layer 3 measurement quantity, and the second-type measurement quantity may be a layer 1 measurement quantity. For example, the layer 1 measurement quantity may also be referred to as a beam-level measurement quantity, and the layer 1 measurement quantity may include one or more of the following: layer 1 reference signal received power (reference signal received power, RSRP), layer 1 reference signal received quality (reference signal received quality, RSRQ), a layer 1 received signal strength indicator (Received Signal Strength Indicator, RSSI), and a layer 1 signal to interference plus noise ratio (signal to interference plus noise ratio, SINR). The layer 3 measurement quantity may also be referred to as a cell-level measurement quantity, and the layer 3 measurement quantity may include one or more of the following: layer 3 RSRP, layer 3 RSRQ, a layer 3 RSSI, and a layer 3 SINR. It should be noted that the measurement quantity is not limited to the foregoing enumerated items in embodiments of this application, and the measurement quantity may further include another quantity. Similarly, the prediction model may also predict another possible measurement quantity.

The following describes an input and an output of the prediction model with reference to Case 1 to Case 3.

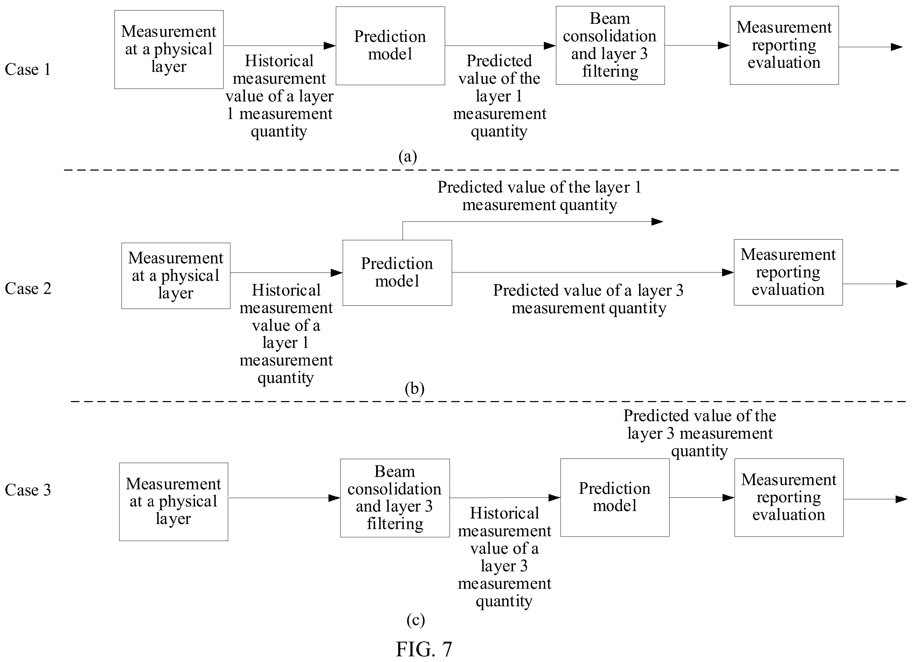

Case 1: Refer to (a) in FIG. 7. The input of the prediction model is a historical measurement value of the layer 1 measurement quantity, and the output of the prediction model is a predicted value of the layer 1 measurement quantity. In this case, the terminal may process, for example, perform beam consolidation and layer 3 filtering on, the predicted value of the layer 1 measurement quantity, to obtain a predicted value of the layer 3 measurement quantity. An existing configuration may be reused for a correlation coefficient of the layer 3 filtering. In other words, in Case 1, the terminal may directly obtain the predicted value of the layer 1 measurement quantity (for example, the predicted value of the layer 1 measurement quantity may be used for LTM handover decision) based on the output of the prediction model, and the terminal may process the predicted value of the layer 1 measurement quantity, to obtain the predicted value of the layer 3 measurement quantity.

Case 2: Refer to (b) in FIG. 7. The input of the prediction model is a historical measurement value and/or a current measurement value of the layer 1 measurement quantity, and the output of the prediction model is a predicted value of the layer 3 measurement quantity. In this case, beam consolidation and layer 3 filtering have been integrated into the prediction model, and the network device may not need to configure a parameter related to the layer 3 filtering for the terminal. Optionally, in Case 2, the output of the prediction model may further include a predicted value of the layer 1 measurement quantity. In other words, in Case 2, the terminal may directly obtain the predicted value of the layer 1 measurement quantity (for example, the predicted value of the layer 1 measurement quantity may be used for LTM handover decision) and the predicted value of the layer 3 measurement quantity based on the output of the prediction model.

Case 3: Refer to (c) in FIG. 7. The input of the prediction model is a historical measurement value and/or a current measurement value of the layer 3 measurement quantity, and the output of the prediction model is a predicted value of the layer 3 measurement quantity.

It may be understood that the input of the prediction model may further include other possible information, for example, one or more of the following:
1. terminal information like movement information (for example, a speed and a direction) of the terminal, location information of the terminal, capability information (for example, an AI capability) of the terminal, and a type of the terminal (for example, a handheld terminal, a vehicle-mounted terminal, or an on-board terminal);
2. a channel parameter like frequency, line of sight (line of sight, LOS), or non line of sight (non line of sight, NLOS);
3. site information like engineering parameters such as ground station/unmanned aerial vehicle (unmanned aerial vehicle, UAV)/satellite, speed, and altitude;
4. environment information/a network coverage map, where for example, the environment information may be information describing an environment around the terminal, such as building height or tree height; the network coverage map may be signal coverage information that is of different locations in a given area and that is provided by an operator, or may be a signal coverage strength map for different locations that is established by the terminal, or another parameter having a similar function; and
5. model-related information, for example, an output type of the prediction model (for example, the predicted value of the layer 1 measurement quantity or the predicted value of the layer 3 measurement quantity).

In addition, the prediction model in embodiments of this application may be an artificial intelligence (artificial intelligence, AI) model. The AI model is a specific implementation of an AI function, and may represent a mapping relationship between an input and an output of the model. In embodiments of this application, a prediction model may be loaded on a terminal side. The prediction model may be obtained by the terminal through training, or may be obtained by the network device through training and sent to the terminal, or may be obtained through operations, administration and maintenance (operations, administration and maintenance, OAM) training and sent to the terminal. This is not specifically limited.

The following describes in detail the communication method provided in embodiments of this application with reference to specific embodiments. In specific embodiments, an example in which the method provided in embodiments of this application is applied to the communication system shown in FIG. 1 is used. In addition, the method provided in embodiments of this application may be performed by a first communication apparatus and a second communication apparatus. The first communication apparatus may be a terminal, or may be a chip, a chip system, or a processor that supports the terminal in implementing the method. The second communication apparatus may be a network device, or may be a chip, a chip system, or a processor that supports the network device in implementing the method, or may be a logical node, a logical module, or software that can implement all or some functions of the network device.

### Embodiment 1

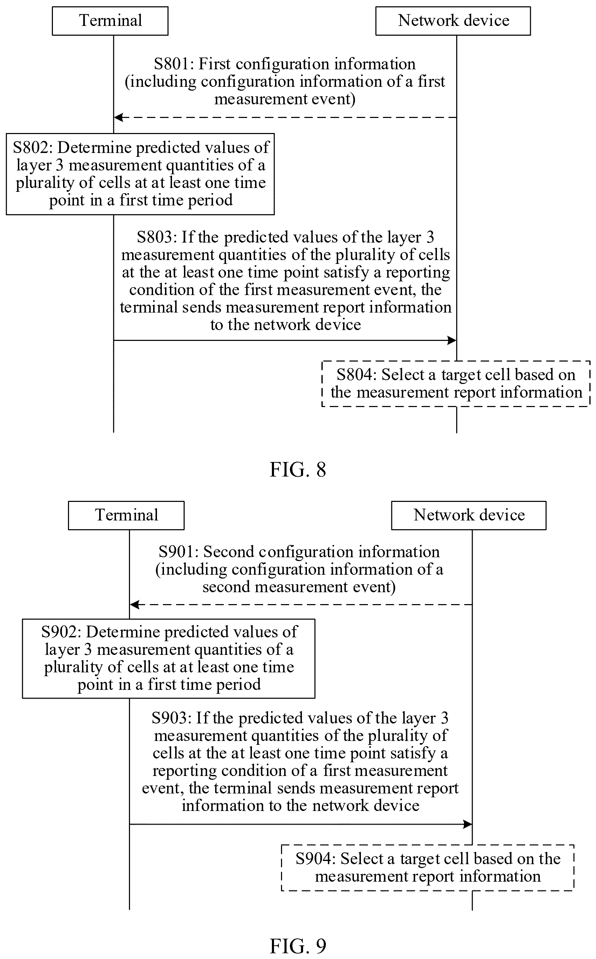

**FIG. 8** is a schematic flowchart corresponding to a communication method according to Embodiment 1 of this application. As shown in FIG. 8, the method includes the following steps.

**S801:** A network device sends first configuration information to a terminal, where the first configuration information may include measurement configuration information.

For example, a parameter corresponding to a first measurement event may be configured based on the measurement configuration information. The first measurement event may be the foregoing A3 event, or may be another possible measurement event. In this embodiment of this application, an example in which the first measurement event is the A3 event is used for description. The parameter corresponding to the first measurement event may include one or more of the following: Hys, Off, and TTT. For content included in the measurement configuration information, refer to the descriptions of the measurement configuration in (1.1) described above.

Optionally, the first configuration information may further include other possible information, for example, one or more of first information, second information, third information, fourth information, and fifth information.

### (1) First information

The first information indicates the terminal to perform measurement reporting evaluation based on a predicted value. In other words, the first information indicates the terminal to perform measurement based on AI. Further, the terminal may determine, based on the first information and predicted values of layer 3 measurement quantities of a plurality of cells at at least one time point in a first time period, whether to trigger sending of measurement report information (for an action of a terminal side, refer to S803). Therefore, this may also be described as that the first information indicates to determine, based on predicted values of layer 3 measurement quantities of a plurality of cells at at least one time point in a first time period, whether to trigger sending of measurement report information. The plurality of cells may include a serving cell and/or a candidate cell of the terminal. For example, the plurality of cells may include one serving cell and/or at least one candidate cell.

For example, the first information may be information dedicated to indicating that "the terminal performs measurement reporting evaluation based on the predicted value". Alternatively, the first information may be reused as other possible information. For example, the first information may be reused as the second information or the third information. In other words, the second information or the third information may implicitly indicate the terminal to perform measurement reporting evaluation based on the predicted value.

In other words, if the network device sends the first information to the terminal, the terminal may perform measurement reporting evaluation based on the predicted value; or if the network device does not send the first information to the terminal, the terminal may perform measurement reporting evaluation in a manner in a conventional technology.

It may be understood that, in another possible example, that "the terminal performs measurement reporting evaluation based on the predicted value" may alternatively be agreed on in a protocol. In this case, the network device does not need to send the first information to the terminal, and the terminal may perform measurement reporting evaluation based on the predicted value by default.

### (2) Second information

The second information indicates a type of a measurement quantity corresponding to an input of a first prediction model and/or a type of a measurement quantity corresponding to an output of the first prediction model.

For example, the second information indicates that the measurement quantity corresponding to the input of the first prediction model is a layer 1 measurement quantity, and the measurement quantity corresponding to the output of the first prediction model is a layer 1 measurement quantity, that is, the foregoing Case 1. In this case, the input of the first prediction model includes historical measurement values of layer 1 measurement quantities of the plurality of cells, and the output of the first prediction model includes predicted values of the layer 1 measurement quantities of the plurality of cells at the at least one time point.

For another example, the second information indicates that the measurement quantity corresponding to the input of the first prediction model is a layer 1 measurement quantity, and the measurement quantity corresponding to the output of the first prediction model is a layer 3 measurement quantity, that is, the foregoing Case 2. In this case, the input of the first prediction model includes historical measurement values of layer 1 measurement quantities of the plurality of cells, and the output of the first prediction model includes predicted values of layer 3 measurement quantities of the plurality of cells at the at least one time point.

For another example, the second information indicates that the measurement quantity corresponding to the input of the first prediction model is a layer 3 measurement quantity, and the measurement quantity corresponding to the output of the first prediction model is a layer 3 measurement quantity, that is, the foregoing Case 3. In this case, the input of the first prediction model includes historical measurement values of layer 3 measurement quantities of the plurality of cells, and the output of the first prediction model includes predicted values of the layer 3 measurement quantities of the plurality of cells at the at least one time point.

It may be understood that, in another possible example, "the type of the measurement quantity corresponding to the input of the first prediction model and/or the type of the measurement quantity corresponding to the output of the first prediction model" may alternatively be agreed on in a protocol. In this case, the network device does not need to send the second information to the terminal.

### (3) Third information

The third information is for selecting the first prediction model from a plurality of models of the terminal. For example, a plurality of models may be loaded on the terminal side, and different models are applicable to different scenarios, so that the network device can indicate, based on the third information, the terminal to specifically select a model for prediction.

### (4) Fourth information

The fourth information indicates content included in the measurement report information. For details, refer to the following descriptions.

### (5) Fifth information

The fifth information indicates a time point in the first time period (where the first time period may include at least one time point), in other words, indicates the terminal to predict predicted values of a measurement quantity at these time points in the first time period. The at least one time point in the first time period may be distributed at an equal interval, or may be distributed at unequal intervals. This is not specifically limited.

The fifth information indicates the at least one time point in a plurality of manners. For example, the fifth information may include an offset of each of the at least one time point relative to a reference time point. In Embodiment 1, the reference time point may be a first time point, and in Embodiment 2, the reference time point may be a second time point.

In addition, a maximum value of the at least one time point (that is, a time point that is farthest from current time) needs to satisfy an AI prediction capability of the terminal. Therefore, when configuring the at least one time point in the first time period, the network device needs to first learn of the AI prediction capability of the terminal (for example, the terminal may report the AI prediction capability to the network device), to ensure that configured prediction time does not exceed a maximum time range that can be predicted by the terminal.

In another possible example, a measurement time point in a time period of T0 to T0+TTT may be reused as the at least one time point in the first time period. In other words, the first time period is the time period of T0 to T0+TTT, and the at least one time point in the first time period is the measurement time point in the time period of T0 to T0+TTT. To be specific, after determining, at a moment T0, that an entry condition of the first measurement event is satisfied, the terminal may predict, by using the first prediction model, each measurement time point in the time period of T0 to T0+TTT, and does not need to perform actual measurement at each measurement time point in the time period of T0 to T0+TTT.

It should be noted that, in this embodiment of this application, S801 is an optional step.

**S802:** The terminal determines the predicted values of the layer 3 measurement quantities of the plurality of cells at the at least one time point in the first time period.

For example, the terminal may obtain, through measurement based on the first configuration information, the measurement values of the layer 3 measurement quantities of the plurality of cells at the first time point. If the measurement values of the layer 3 measurement quantities of the plurality of cells at the first time point satisfy the entry condition of the first measurement event, the first prediction model is started for prediction, to determine the predicted values of the layer 3 measurement quantities of the plurality of cells at the at least one time point in the first time period. The first time point is before a 1^{st} time point in the at least one time point.

Specifically, the terminal may determine the predicted values of the layer 3 measurement quantities of the plurality of cells at the at least one time point in the first time period based on the output of the first prediction model.

For example, the first configuration information is for configuring the measurement quantity corresponding to the input of the first prediction model as the layer 1 measurement quantity, and configuring the measurement quantity corresponding to the output of the first prediction model as the layer 1 measurement quantity. In this case, the input of the first prediction model includes the historical measurement values of the layer 1 measurement quantities of the plurality of cells, and the output of the first prediction model includes the predicted values of the layer 1 measurement quantities of the plurality of cells at the at least one time point. The terminal may process (for example, perform beam consolidation and layer 3 filtering on) the predicted values of the layer 1 measurement quantities of the plurality of cells at the at least one time point, to obtain the predicted values of the layer 3 measurement quantities of the plurality of cells at the at least one time point.

For another example, the first configuration information is for configuring the measurement quantity corresponding to the input of the first prediction model as the layer 1 measurement quantity, and configuring the measurement quantity corresponding to the output of the first prediction model as the layer 3 measurement quantity. In this case, the input of the first prediction model includes the historical measurement values of the layer 1 measurement quantities of the plurality of cells, and the output of the first prediction model includes the predicted values of the layer 3 measurement quantities of the plurality of cells at the at least one time point. To be specific, the terminal may directly obtain the predicted values of the layer 3 measurement quantities of the plurality of cells at the at least one time point based on the output of the first prediction model.

For another example, the first configuration information is for configuring the measurement quantity corresponding to the input of the first prediction model as the layer 3 measurement quantity, and configuring the measurement quantity corresponding to the output of the first prediction model as the layer 3 measurement quantity. In this case, the input of the first prediction model includes the historical measurement values of the layer 3 measurement quantities of the plurality of cells, and the output of the first prediction model includes the predicted values of the layer 3 measurement quantities of the plurality of cells at the at least one time point. To be specific, the terminal may directly obtain the predicted values of the layer 3 measurement quantities of the plurality of cells at the at least one time point based on the output of the first prediction model.

The historical measurement values of the layer 1 measurement quantities of the plurality of cells may include measurement values of the layer 1 measurement quantities of the plurality of cells at the first time point, and further include measurement values of the layer 1 measurement quantities of the plurality of cells at another time point before the first time point. The historical measurement values of the layer 3 measurement quantities of the plurality of cells may include the measurement values of the layer 3 measurement quantities of the plurality of cells at the first time point, and optionally, further include measurement values of the layer 3 measurement quantities of the plurality of cells at another time point before the first time point. It should be understood that the measurement values of the layer 1 measurement quantities or the layer 3 measurement quantities of the plurality of cells at the first time point may also be referred to as current measurement values of the layer 1 measurement quantities or the layer 3 measurement quantities of the plurality of cells.

**S803:** The terminal performs measurement reporting evaluation based on the predicted values of the layer 3 measurement quantities of the plurality of cells at the at least one time point in the first time period. If the predicted values of the layer 3 measurement quantities of the plurality of cells at the at least one time point satisfy a reporting condition of the first measurement event, the terminal sends the measurement report information to the network device.

Herein, that the predicted values of the layer 3 measurement quantities of the plurality of cells at the at least one time point in the first time period satisfy the reporting condition of the first measurement event may mean that predicted values of the layer 3 measurement quantities of the plurality of cells at each time point in the first time period satisfy the entry condition of the first measurement event, or that predicted values of the layer 3 measurement quantities of the plurality of cells in the first time period continuously satisfy (or always satisfy) the entry condition of the first measurement event.

For example, the measurement report information may include at least one of the following:
(1) the predicted values of the layer 3 measurement quantities of the plurality of cells at the at least one time point;
(2) an average predicted value, a maximum predicted value, or a minimum predicted value of the predicted values of the layer 3 measurement quantities of the plurality of cells at the at least one time point, or predicted values of the layer 3 measurement quantities of the plurality of cells at a last time point in the at least one time point;
(3) the predicted values of the layer 1 measurement quantities of the plurality of cells at the at least one time point;
(4) an average predicted value, a maximum predicted value, or a minimum predicted value of the predicted values of the layer 1 measurement quantities of the plurality of cells at the at least one time point, or predicted values of the layer 1 measurement quantities of the plurality of cells at the last time point in the at least one time point; and
(5) an identifier of the at least one candidate cell, where for example, the at least one candidate cell may be selected, by the terminal based on at least one of (1) to (4) described above, from candidate cells included in the plurality of cells. Optionally, when the measurement report information includes the identifier of the at least one candidate cell, the measurement report information may further include a probability corresponding to each candidate cell in the at least one candidate cell. For example, a probability corresponding to a candidate cell 1 is a probability that is predicted by the terminal by using a prediction model and that the terminal can be successfully handed over to the candidate cell 1.

In this way, the measurement report information includes at least one of (1) to (5) described above, so that resource overheads of measurement reporting are reduced.

Optionally, the measurement report information may further include the following:
(6) the measurement values of the layer 3 measurement quantities of the plurality of cells at the first time point; and
(7) the measurement values of the layer 1 measurement quantities of the plurality of cells at the first time point.

It may be understood that, if the measurement quantity corresponding to the input of the first prediction model is the layer 1 measurement quantity, and the measurement quantity corresponding to the output of the first prediction model is the layer 1 measurement quantity, the measurement report information may include at least one of (1) to (5) described above; or if the measurement quantity corresponding to the input of the first prediction model is the layer 1 measurement quantity or the layer 3 measurement quantity, and the measurement quantity corresponding to the output of the first prediction model is the layer 3 measurement quantity, the measurement report information may include at least one of (1), (2), and (5) described above.

In addition, the terminal may send the measurement report information to the network device based on the fourth information. In other words, the network device may indicate, based on the fourth information, specific content included in the measurement report information. For example, if the fourth information indicates that the measurement report information includes the predicted value of the layer 3 measurement quantity, the measurement report information sent by the terminal may include (1) and/or (2). For another example, if the fourth information indicates that the measurement report information includes the predicted value of the layer 1 measurement quantity, the measurement report information sent by the terminal may include (3) and/or (4). For another example, if the fourth information indicates that the measurement report information includes a candidate cell list, the measurement report information sent by the terminal may include (5).

Alternatively, (1) to (7) in the measurement report information respectively correspond to a reporting manner 1 to a reporting manner 7. If the fourth information indicates the reporting manner 1, the measurement report information may include (1); if the fourth information indicates the reporting manner 2, the measurement report information may include (2); and the rest may be deduced by analogy.

Optionally, the foregoing method further includes:
**S804:** The network device selects a target cell based on the measurement report information.

For example, for common handover, the network device may select a target cell based on the measurement report information, and send a handover command to the terminal. For a subsequent procedure, refer to a conventional technology. For CHO or LTM, the network device may select the at least one candidate cell based on the measurement report information, and send an RRC reconfiguration message to the terminal. For a subsequent procedure, refer to a conventional technology.

There are a plurality of implementations in which the network device selects the at least one candidate cell based on the measurement report information. The common handover is used as an example. If the measurement report information includes (1) and/or (2), the target cell selected by the network device may be a cell that is in the candidate cells included in the plurality of cells and that is with a minimum predicted value fluctuation, a largest average predicted value, a largest maximum predicted value, or a largest minimum predicted value of predicted values of layer 3 measurement quantities.

If the measurement report information includes (3) and/or (4), the target cell selected by the network device may be a cell that is in the candidate cells included in the plurality of cells and that is with a minimum predicted value fluctuation, a largest average predicted value, a largest maximum predicted value, or a largest minimum predicted value of predicted values of layer 1 measurement quantities.

If the measurement report information includes (5), the network device may directly obtain the target cell, and does not need to select the target cell. This case may be understood as follows that the terminal side performs an operation of selecting the target cell, and notifies the network device of the selected target cell through the measurement report information.

If the measurement report information includes (6) and/or (7), the network device may select the target cell based on the measurement report information in a manner in a conventional technology.

According to the foregoing method, after determining that the entry condition of the first measurement event is satisfied, the terminal may determine predicted values of first-type measurement quantities of the plurality of cells at the at least one time point, and perform measurement reporting evaluation based on the predicted values of the first-type measurement quantities of the plurality of cells at the at least one time point. In this way, the terminal does not need to perform actual measurement at the at least one time point, so that a measurement reporting process can be accelerated (for example, with reference to FIG. 3B, in a conventional technology, the terminal can perform measurement reporting evaluation only after completing measurement in the time period of T0+TTT. However, in Embodiment 1 of this application, the terminal can perform measurement reporting evaluation after starting prediction at a time point T0 to obtain a predicted value), and this helps reduce a handover exception caused by improper parameter configuration corresponding to a measurement event.

### Embodiment 2

**FIG. 9** is a schematic flowchart corresponding to a communication method according to Embodiment 2 of this application. As shown in FIG. 9, the method includes the following steps.

**S901:** A network device sends second configuration information to a terminal, where the second configuration information includes measurement configuration information.

For example, a parameter corresponding to a second measurement event may be configured based on the measurement configuration information.

For example, the second measurement event may be an event newly introduced in this embodiment of this application. A difference between the second measurement event and the first measurement event (that is, the A3 event) in Embodiment 1 lies in the following: For the first measurement event, the terminal can start prediction only after determining that the entry condition of the first measurement event is satisfied. For example, if a candidate cell 1 satisfies the entry condition of the first measurement event, and a candidate cell 2 does not satisfy the entry condition of the first measurement event, the terminal starts to predict a predicted value of a measurement quantity of the candidate cell 1 at a corresponding time point, but does not predict a predicted value of a measurement quantity of the candidate cell 2 at the corresponding time point. For the second measurement event, at each measurement time point (or measurement moment), regardless of whether an entry condition of the second measurement event is satisfied, the terminal starts to predict a predicted value of a measurement quantity of a candidate cell at a corresponding time point. For content other than this difference, for the second measurement event, refer to the first measurement event.

In addition, the second configuration information may further include other possible information. For details, refer to the descriptions of the first configuration information.

**S902:** The terminal determines, at a second time point, predicted values of layer 3 measurement quantities of a plurality of cells at at least one time point in a first time period.

Herein, the terminal may start a first prediction model at the second time point to perform prediction, so as to determine predicted values of first-type measurement quantities of the plurality of cells at the at least one time point in the first time period. The second time point is a time point at which measurement is performed on the first-type measurement quantities or second-type measurement quantities of the plurality of cells. That is, the second time point is a measurement time point. For example, a time point at which measurement is performed on the first-type measurement quantities of the plurality of cells and a time point at which measurement is performed on the second-type measurement quantities of the plurality of cells may be a same time point. The second time point is before a 1^{st} time point in the at least one time point. In an example, the second time point and the first time point in Embodiment 1 may be a same time point.

It may be understood that a candidate cell in the plurality of cells may include a cell that satisfies the entry condition of the second measurement event at the second time point, or may include a cell that does not satisfy the entry condition of the second measurement event (in Embodiment 1, all candidate cells in the plurality of cells are cells that satisfy the entry condition of the first measurement event at the first time point).

**S903:** The terminal performs measurement reporting evaluation based on the predicted values of the layer 3 measurement quantities of the plurality of cells at the at least one time point. If the predicted values of the layer 3 measurement quantities of the plurality of cells at the at least one time point satisfy a reporting condition, the terminal sends measurement report information to the network device.

The candidate cell 2 is used as an example. Even if the candidate cell 2 does not satisfy the entry condition of the first measurement event at the second time point, but a predicted value of the candidate cell 2 at the at least one time point in the first time period satisfies the reporting condition, measurement reporting is triggered. In this way, the network device may subsequently select the candidate cell 2 as a target cell.

Herein, the measurement report information may include one or more of the following: (1) the predicted values of the layer 3 measurement quantities of the plurality of cells at the at least one time point; (2) an average predicted value, a maximum predicted value, or a minimum predicted value of the predicted values of the layer 3 measurement quantities of the plurality of cells at the at least one time point, or predicted values of the layer 3 measurement quantities of the plurality of cells at a last time point in the at least one time point; (3) predicted values of layer 1 measurement quantities of the plurality of cells at the at least one time point; (4) an average predicted value, a maximum predicted value, or a minimum predicted value of the predicted values of the layer 1 measurement quantities of the plurality of cells at the at least one time point, or predicted values of the layer 1 measurement quantities of the plurality of cells at a last time point in the at least one time point; and (5) an identifier of the at least one candidate cell.

Optionally, the measurement report information further includes: (6) measurement values of the layer 3 measurement quantities of the plurality of cells at the first time point; and (7) measurement values of layer 1 measurement quantities of the plurality of cells at the first time point.

Optionally, the foregoing method further includes:
**S904:** The network device selects a target cell based on the measurement report information.

Herein, the network device may select the target cell based on at least one of (1) to (5) included in the measurement report information.

The foregoing focuses on the difference between Embodiment 2 and Embodiment 1. For other content other than the difference, for implementation of Embodiment 2, refer to the descriptions in Embodiment 1.

According to the foregoing method, the terminal may determine, at each measurement time point, the predicted values of the first-type measurement quantities of the plurality of cells at the at least one time point, and perform measurement reporting evaluation based on the predicted values of the first-type measurement quantities of the plurality of cells at the at least one time point. In this way, the terminal does not need to perform actual measurement at the at least one time point, so that a measurement reporting process can be accelerated, and this helps reduce a handover exception caused by improper parameter configuration corresponding to a measurement event. In addition, the terminal starts prediction at each measurement time point, so that a selection range of the target cell can be expanded, and this helps select an optimal target cell.

### Embodiment 3

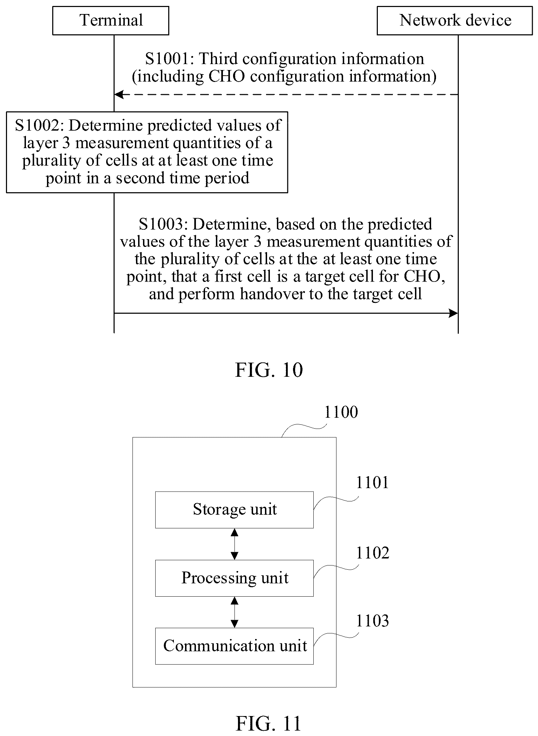

**FIG. 10** is a schematic flowchart corresponding to a communication method according to Embodiment 3 of this application. As shown in FIG. 10, the method includes the following steps.

**S1001:** A network device sends third configuration information to a terminal, where the third configuration information may include CHO configuration information, and the CHO configuration information is for configuring an entry condition of a measurement event of CHO.

For example, the third configuration information may further include other possible information, for example, at least one of sixth information, seventh information, eighth information, ninth information, and tenth information.

### (1) Sixth information

The sixth information indicates at least one candidate cell for the CHO.

For example, the at least one candidate cell may be selected by the network device in a manner in a conventional technology, or may be selected by the network device in a manner described in Embodiment 1 or Embodiment 2 (in other words, Embodiment 3 may be implemented in combination with Embodiment 1 or Embodiment 2).

### (2) Seventh information

The seventh information indicates the terminal to perform CHO evaluation based on a predicted value, so that the terminal may determine, based on the seventh information and predicted values of layer 3 measurement quantities of a plurality of cells at at least one time point in a second time period, whether to trigger the CHO (for an action of a terminal side, refer to S1003). Therefore, this may also be described as that the seventh information indicates to determine, based on predicted values of layer 3 measurement quantities of a plurality of cells at at least one time point in a second time period, whether to trigger the CHO. The plurality of cells may include a serving cell and/or at least one candidate cell of the terminal.

For example, the seventh information may be information dedicated to indicating that "the terminal performs CHO evaluation based on the predicted value". Alternatively, the first information may be reused as other possible information. For example, the first information may be reused as the eighth information or the ninth information. In other words, the eighth information or the ninth information may implicitly indicate the terminal to perform CHO evaluation based on the predicted value.

In other words, if the network device sends the seventh information to the terminal, the terminal may perform CHO evaluation based on the predicted value; or if the network device does not send the seventh information to the terminal, the terminal may perform CHO evaluation in a manner in a conventional technology.

It may be understood that, in another possible example, that "the terminal performs CHO evaluation based on the predicted value" may alternatively be agreed on in a protocol. In this case, the network device does not need to send the seventh information to the terminal, and the terminal may perform CHO evaluation based on the predicted value by default.

### (3) Eighth information

The eighth information indicates a type of a measurement quantity corresponding to an input of a second prediction model and/or a type of a measurement quantity corresponding to an output of the second prediction model. For details, refer to the descriptions of the second information in Embodiment 1.

For example, the second prediction model and the first prediction model may be different prediction models.

### (4) Ninth information

The ninth information is for selecting the second prediction model from a plurality of models of the terminal. For example, a plurality of models may be loaded on the terminal side, and different models are applicable to different scenarios, so that the network device can indicate, based on the ninth information, the terminal to specifically select a model for prediction.

### (5) Tenth information

The tenth information indicates a time point in the second time period (where the second time period may include at least one time point), in other words, indicates the terminal to predict predicted values of a measurement quantity at these time points in the second time period. The at least one time point in the second time period may be distributed at an equal interval, or may be distributed at unequal intervals. This is not specifically limited. For details, refer to the descriptions of the fifth information in Embodiment 1.

It may be understood that duration of the second time period may be the same as or different from duration of the first time period. This is not specifically limited.

**S1002:** The terminal determines the predicted values of the layer 3 measurement quantities of the plurality of cells at the at least one time point in the second time period.

For example, the terminal may obtain, through measurement based on the third configuration information, measurement values of the layer 3 measurement quantities of the plurality of cells at a third time point. If the measurement values of the layer 3 measurement quantities of the plurality of cells at the third time point satisfy the entry condition of the measurement event of the CHO, the second prediction model is started for prediction, to determine the predicted values of the layer 3 measurement quantities of the plurality of cells at the at least one time point in the second time period. The third time point is before a 1^{st} time point in the at least one time point in the second time period.

Alternatively, the terminal may start the second prediction model at a fourth time point based on the third configuration information to perform prediction, so as to determine the predicted values of the layer 3 measurement quantities of the plurality of cells at the at least one time point in the second time period. The fourth time point may be a time point at which measurement is performed on layer 1 measurement quantities or the layer 3 measurement quantities of the plurality of cells. That is, the fourth time point is a measurement time point. The third time point is before a 1^{st} time point in the at least one time point in the second time period.

**S1003:** The terminal determines, based on the predicted values of the layer 3 measurement quantities of the plurality of cells at the at least one time point in the second time period, that a first cell is a target cell for the CHO, and performs handover to the target cell.

For example, after determining that the predicted values of the layer 3 measurement quantities of the plurality of cells at the at least one time point in the second time period satisfy an execution condition of the CHO, the terminal may select the first cell from the at least one candidate cell as the target cell for the CHO. That the terminal determines that predicted values of first-type measurement quantities of the plurality of cells at the at least one time point in the second time period satisfy the execution condition of the CHO may mean that the terminal determines that predicted values of the first-type measurement quantities of the plurality of cells at each time point in the second time period satisfy the entry condition of the measurement event of the CHO, or that the terminal determines that predicted values of the first-type measurement quantities of the plurality of cells in the second time period continuously satisfy (or always satisfy) the entry condition of the measurement event of the CHO. For example, the measurement event of the CHO may be condEvent A3, and condEventA3 may reuse an entry condition of an A3 event.

According to the foregoing method, the terminal may determine the predicted values of the first-type measurement quantities of the plurality of cells at the at least one time point, and perform CHO evaluation based on the predicted values of the first-type measurement quantities of the plurality of cells at the at least one time point. In this way, the terminal does not need to perform actual measurement at the at least one time point, so that a CHO process can be accelerated, and a CHO delay can be reduced, and this helps reduce a handover exception caused by improper parameter configuration corresponding to CHO.

For Embodiment 1 to Embodiment 3, it may be understood that:
**(1)** Embodiment 1 to Embodiment 3 may be separately implemented, or may be implemented in combination. For example, Embodiment 3 may be implemented in combination with Embodiment 1 or Embodiment 2. To be specific, the step procedure in Embodiment 3 may be performed after the step procedure in Embodiment 1 or Embodiment 2.
**(2)** In Embodiment 1 to Embodiment 3, an example in which an output of a prediction model is a predicted value of a layer 1 measurement quantity or a predicted value of a layer 3 measurement quantity is used. In another possible embodiment, the output of the prediction model may alternatively be a candidate cell list (when the prediction model is the first prediction model in Embodiment 1 or Embodiment 2, the candidate cell list includes a target cell for common handover or at least one candidate cell for CHO or LTM; or when the prediction model is the second prediction model in Embodiment 3, the candidate cell list includes a target cell for CHO).
**(3)** Embodiment 1 to Embodiment 3 are described by using an example in which "the terminal performs measurement reporting evaluation or CHO evaluation based on the predicted values of the layer 3 measurement quantities of the plurality of cells at the at least one time point". In another possible embodiment, the terminal may alternatively perform measurement reporting evaluation or CHO evaluation based on predicted values of layer 1 measurement quantities of the plurality of cells at the at least one time point. For specific implementation, refer to the descriptions in embodiments of this application. Details are not described again.
**(4)** Step numbers in the flowcharts described in Embodiment 1 to Embodiment 3 are merely an example of an execution procedure, and do not constitute a limitation on an execution sequence of the steps. In embodiments of this application, there is no strict execution sequence between steps that do not have a time sequence dependency relationship with each other. Not all the steps shown in the flowcharts are mandatory steps. Some steps may be deleted from the flowcharts based on actual needs, or another possible step may be added to the flowcharts based on actual needs.
**(5)** The foregoing focuses on differences between different embodiments, different implementations, and different examples, and for other content than the differences, different embodiments may be mutually referenced, or in a same embodiment, different implementations or different examples may also be mutually referenced.

The foregoing mainly describes the solutions provided in embodiments of this application from a perspective of interaction between the terminal and the network device. It may be understood that, to implement the foregoing functions, the terminal and the network device may include corresponding hardware structures and/or software modules for performing the functions. A person skilled in the art should be easily aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional units may be performed on the terminal and the network device based on the foregoing method examples. For example, division into each functional unit may be based on each corresponding function, or two or more functions may be integrated into one unit. The integrated unit may be implemented in a form of hardware, or may be implemented in a form of a software functional unit.

When an integrated unit is used, FIG. 11 is a block diagram of a possible example of an apparatus according to an embodiment of this application. As shown in FIG. 11, the apparatus 1100 may include a processing unit 1102 and a communication unit 1103. The processing unit 1102 is configured to control and manage an action of the apparatus 1100. The communication unit 1103 is configured to support communication between the apparatus 1100 and another device. Optionally, the communication unit 1103 is also referred to as a transceiver unit, and may include a receiving unit and/or a sending unit respectively configured to perform a receiving operation and a sending operation. The apparatus 1100 may further include a storage unit 1101, configured to store program code and/or data of the apparatus 1100.

**(1)** The apparatus 1100 may be the terminal in the foregoing embodiments. The processing unit 1102 may support the apparatus 1100 in performing actions of the terminal in the foregoing method examples. Alternatively, the processing unit 1102 mainly performs internal actions of the terminal in the method examples, and the communication unit 1103 may support communication between the apparatus 1100 and another device.

For example, in an embodiment, the processing unit 1102 is configured to determine predicted values of first-type measurement quantities of a plurality of cells at at least one time point in a first time period, where the plurality of cells include a serving cell and a candidate cell. The communication unit 1103 is configured to: if the predicted values of the first-type measurement quantities of the plurality of cells at the at least one time point satisfy a reporting condition, send measurement report information to a network device.

In a possible design, the communication unit 1103 is further configured to receive first information from the network device, where the first information indicates to determine, based on the predicted values of the first-type measurement quantities of the plurality of cells, whether to trigger sending of the measurement report information.

In a possible design, the processing unit 1102 is specifically configured to obtain the predicted values of the first-type measurement quantities of the plurality of cells at the at least one time point based on an output of a prediction model, where an input of the prediction model includes historical measurement values of second-type measurement quantities of the plurality of cells, and the output of the prediction model includes predicted values of the second-type measurement quantities of the plurality of cells at the at least one time point; an input of the prediction model includes historical measurement values of second-type measurement quantities of the plurality of cells, and the output of the prediction model includes the predicted values of the first-type measurement quantities of the plurality of cells at the at least one time point; or an input of the prediction model includes historical measurement values of the first-type measurement quantities of the plurality of cells, and the output of the prediction model includes the predicted values of the first-type measurement quantities of the plurality of cells at the at least one time point.

In a possible design, the communication unit 1103 is further configured to receive second information and/or third information from the network device, where the second information indicates a type of a measurement quantity corresponding to the input of the prediction model and/or a type of a measurement quantity corresponding to the output of the prediction model; and the third information is for selecting the prediction model from a plurality of models of the terminal.

In a possible design, the measurement report information includes at least one of the following: the predicted values of the first-type measurement quantities of the plurality of cells at the at least one time point; an average predicted value, a maximum predicted value, or a minimum predicted value of the predicted values of the first-type measurement quantities of the plurality of cells at the at least one time point; the predicted values of the second-type measurement quantities of the plurality of cells at the at least one time point; an average predicted value, a maximum predicted value, or a minimum predicted value of the predicted values of the second-type measurement quantities of the plurality of cells at the at least one time point; and an identifier of at least one candidate cell.

In a possible design, the communication unit 1103 is further configured to receive fourth information from the network device, where the fourth information indicates content included in the measurement report information.

In a possible design, the processing unit 1102 is specifically configured to: obtain, through measurement, measurement values of the first-type measurement quantities of the plurality of cells at a first time point; and if the measurement values of the first-type measurement quantities of the plurality of cells at the first time point satisfy an entry condition, determine the predicted values of the first-type measurement quantities of the plurality of cells at the at least one time point, where the first time point is before a 1^{st} time point in the at least one time point.

In a possible design, the processing unit 1102 is specifically configured to determine, at a second time point, the predicted values of the first-type measurement quantities of the plurality of cells at the at least one time point, where the second time point is a time point at which measurement is performed on the first-type measurement quantities or the second-type measurement quantities of the plurality of cells, and the second time point is before a 1^{st} time point in the at least one time point.

In a possible design, the communication unit 1103 is further configured to receive fifth information from the network device, where the fifth information indicates the at least one time point.

In a possible design, the communication unit 1103 is further configured to receive sixth information and seventh information from the network device, where the sixth information indicates at least one candidate cell for cell handover, and the seventh information indicates to determine, based on predicted values of first-type measurement quantities of the serving cell and the at least one candidate cell at at least one time point in a second time period, whether to perform cell handover.

**(2)** The apparatus 1100 may be the network device in the foregoing embodiments. The processing unit 1102 may support the apparatus 1100 in performing actions of the network device in the foregoing method examples. Alternatively, the processing unit 1102 mainly performs internal actions of the network device in the method examples, and the communication unit 1103 may support communication between the apparatus 1100 and another device.

For example, in an embodiment, the communication unit 1103 is configured to: send first information to a terminal, where the first information indicates to determine, based on predicted values of first-type measurement quantities of a plurality of cells at at least one time point in a first time period, whether to trigger sending of measurement report information; and receive the measurement report information from the terminal.

In a possible design, the communication unit 1103 is further configured to send second information and/or third information to the terminal, where the second information indicates a type of a measurement quantity corresponding to an input of a prediction model and/or a type of a measurement quantity corresponding to an output of the prediction model, and the third information is for selecting the prediction model from a plurality of models of the terminal; and the prediction model is for determining the predicted values of the first-type measurement quantities of the plurality of cells at the at least one time point in the first time period.

In a possible design, the input of the prediction model includes historical measurement values of second-type measurement quantities of the plurality of cells, and the output of the prediction model includes predicted values of the second-type measurement quantities of the plurality of cells at the at least one time point; the input of the prediction model includes historical measurement values of second-type measurement quantities of the plurality of cells, and the output of the prediction model includes the predicted values of the first-type measurement quantities of the plurality of cells at the at least one time point; or the input of the prediction model includes historical measurement values of the first-type measurement quantities of the plurality of cells, and the output of the prediction model includes the predicted values of the first-type measurement quantities of the plurality of cells at the at least one time point.

In a possible design, the measurement report information includes at least one of the following: the predicted values of the first-type measurement quantities of the plurality of cells at the at least one time point; an average predicted value, a maximum predicted value, or a minimum predicted value of the predicted values of the first-type measurement quantities of the plurality of cells at the at least one time point; the predicted values of the second-type measurement quantities of the plurality of cells at the at least one time point; an average predicted value, a maximum predicted value, or a minimum predicted value of the predicted values of the second-type measurement quantities of the plurality of cells at the at least one time point; and an identifier of at least one candidate cell.

In a possible design, the communication unit 1103 is further configured to send fourth information to the terminal, where the fourth information indicates content included in the measurement report information.

In a possible design, the communication unit 1103 is further configured to send fifth information to the terminal, where the fifth information indicates the at least one time point.

In a possible design, the communication unit 1103 is further configured to send sixth information and seventh information to the terminal, where the sixth information indicates at least one candidate cell for cell handover, and the seventh information indicates to determine, based on predicted values of first-type measurement quantities of the serving cell and the at least one candidate cell at at least one time point in a second time period, whether to perform cell handover.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by a hardware integrated logic circuit in the processor element or may be implemented in a form in which the processing element invokes software.

In an example, any unit in the foregoing apparatus may be one or more integrated circuits configured to implement the foregoing methods, for example, one or more application-specific integrated circuits (application-specific integrated circuit, ASIC), one or more microprocessors (digital signal processor, DSP), one or more field programmable gate array (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

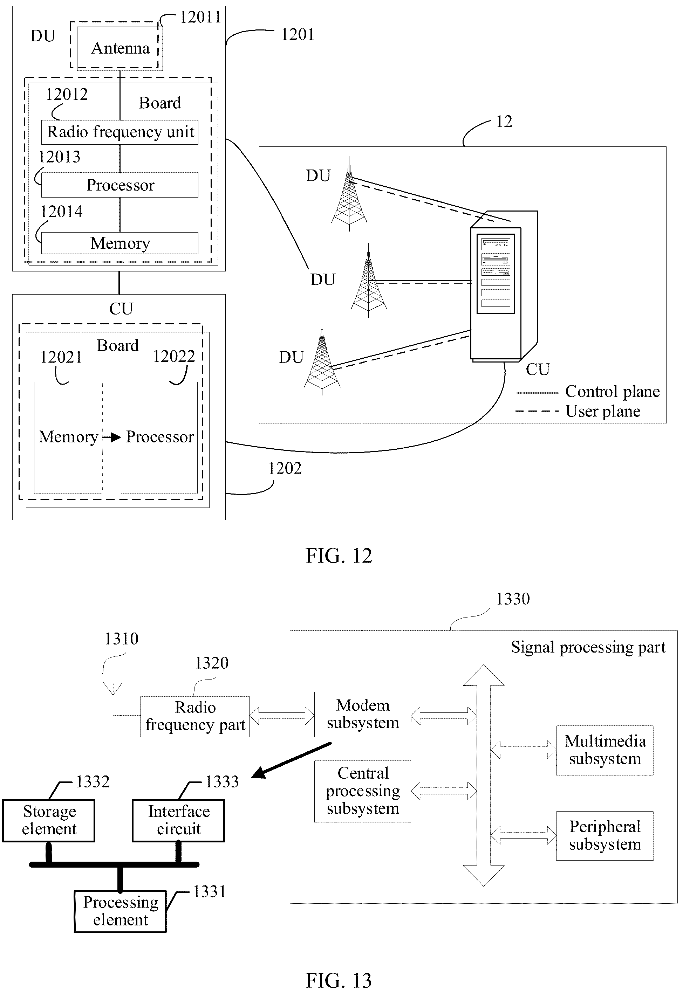

FIG. 12 is a diagram of a structure of a network device according to an embodiment of this application. The network device (or a base station) may be used in the communication system shown in FIG. 1, to perform a function of the network device in the foregoing method embodiments. As shown in FIG. 12, the network device 12 may include one or more DUs 1201 and one or more CUs 1202. The DU 1201 may include at least one antenna 12011, at least one radio frequency unit 12012, at least one processor 12013, and at least one memory 12014. The DU 1201 is mainly configured to: send and receive a radio frequency signal, convert a radio frequency signal and a baseband signal, and process some basebands. The CU 1202 may include at least one processor 12022 and at least one memory 12021.

The CU 1202 is mainly configured to: perform baseband processing, control the network device, and so on. The DU 1201 and the CU 1202 may be physically disposed together, or may be physically disposed separately, that is, a distributed base station. The CU 1202 is a control center of the network device, may also be referred to as a processing unit, and is mainly configured to complete a baseband processing function. For example, the CU 1202 may be configured to control the network device to perform an operation procedure related to the network device in the foregoing method embodiments.

In addition, optionally, the network device 12 may include one or more radio frequency units, one or more DUs, and one or more CUs. The DU may include at least one processor 12013 and at least one memory 12014. The radio frequency unit may include at least one antenna 12011 and at least one radio frequency unit 12012. The CU may include at least one processor 12022 and at least one memory 12021.

In an example, the CU 1202 may include one or more boards, and a plurality of boards may jointly support a radio access network (for example, a 5G network) of a single access technology, or may separately support radio access networks (for example, an LTE network, a 5G network, or another network) of different access technologies. The memory 12021 and the processor 12022 may serve one or more boards. In other words, a memory and a processor may be disposed on each board. Alternatively, a plurality of boards may share a same memory and a same processor. In addition, a necessary circuit may further be disposed on each board. The DU 1201 may include one or more boards, and a plurality of boards may jointly support a radio access network (for example, a 5G network) of a single access technology, or may separately support radio access networks (for example, an LTE network, a 5G network, or another network) of different access technologies. The memory 12014 and the processor 12013 may serve one or more boards. In other words, a memory and a processor may be disposed on each board. Alternatively, a plurality of boards may share a same memory and a same processor. In addition, a necessary circuit may further be disposed on each board.

The network device shown in FIG. 12 can implement processes related to the network device in the foregoing method embodiments. Operations and/or functions of the modules in the network device shown in FIG. 12 are respectively intended to implement corresponding procedures in the foregoing method embodiments. For details, refer to the descriptions in the foregoing method embodiments. To avoid repetition, detailed descriptions are properly omitted herein.

FIG. 13 is a diagram of a structure of a terminal according to an embodiment of this application. The terminal may be used in the communication system shown in FIG. 1, to implement operations of the terminal in the foregoing embodiments. As shown in FIG. 13, the terminal includes an antenna 1310, a radio frequency part 1320, and a signal processing part 1330. The antenna 1310 is connected to the radio frequency part 1320. In a downlink direction, the radio frequency part 1320 receives, via the antenna 1310, information sent by a network device, and sends the information sent by the network device to the signal processing part 1330 for processing. In an uplink direction, the signal processing part 1330 processes information of the terminal and sends the processed information to the radio frequency part 1320, and the radio frequency part 1320 processes information of the terminal, and then sends the processed information to the network device via the antenna 1310.

The signal processing part 1330 may include a modem subsystem configured to process data at each communication protocol layer. The signal processing part 1330 may further include a central processing subsystem configured to implement processing on an operating system and an application layer of the terminal. In addition, the signal processing part 1330 may further include another subsystem, for example, a multimedia subsystem or a peripheral subsystem. The multimedia subsystem is configured to control a camera or a screen display of the terminal. The peripheral subsystem is configured to implement a connection to another device. The modem subsystem may be a chip that is separately arranged.

The modem subsystem may include one or more processing elements 1331, for example, a main control CPU and another integrated circuit. In addition, the modem subsystem may further include a storage element 1332 and an interface circuit 1333. The storage element 1332 is configured to store data and a program. However, a program configured to perform the method performed by the terminal in the foregoing methods may not be stored in the storage element 1332, but is stored in a memory outside the modem subsystem, and when to be used, the program is loaded and used by the modem subsystem. The interface circuit 1333 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps of the foregoing methods may be implemented in a form in which a processing element schedules a program. For example, an apparatus used in the terminal includes a processing element and a storage element, and the processing element invokes a program stored in the storage element, to perform the methods performed by the terminal in the foregoing method embodiments. The storage element may be a storage element located on a same chip as the processing element, that is, an on-chip storage element.

In another implementation, the program configured to perform the method performed by the terminal in the foregoing methods may be in a storage element located on a different chip from the processing element, that is, an off-chip storage element. In this case, the processing element invokes or loads the program from the off-chip storage element to the on-chip storage element, to invoke and perform the methods performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SoC, and the SoC chip is configured to implement the foregoing methods. At least one processing element and a storage element may be integrated into the chip, and the foregoing methods performed by the terminal is implemented in a form in which the processing element invokes a program stored in the storage element. Alternatively, at least one integrated circuit may be integrated into the chip, to implement the foregoing methods performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all of the steps performed by the terminal in a first manner, to be specific, by invoking the program stored in the storage element; or may perform some or all of the steps performed by the terminal in a second manner, to be specific, by combining instructions and a hardware integrated logic circuit in a processor element. It is clear that some or all of the steps performed by the terminal may alternatively be performed by combining the first manner and the second manner.

The processing element herein is the same as that described above, and may be implemented by a processor. A function of the processing element may be the same as a function of the processing unit described in FIG. 7. For example, the processing element may be a general-purpose processor, for example, a CPU; or may be one or more integrated circuits configured to implement the foregoing methods, for example, one or more ASICs, one or more microprocessors DSPs, one or more FPGAs, or a combination of at least two of these forms of integrated circuits. The storage element may be implemented by a memory. A function of the storage element may be the same as a function of the storage unit described in FIG. 7. The storage element may be one memory, or a general term for a plurality of memories.

The terminal shown in FIG. 13 can implement processes related to the terminal in the foregoing method embodiments. Operations and/or functions of modules in the terminal shown in FIG. 13 are respectively intended to implement corresponding procedures in the foregoing method embodiments. For details, refer to the descriptions in the foregoing method embodiments. To avoid repetition, detailed descriptions are properly omitted herein.

An embodiment of this application further provides a communication system. The communication system may include a terminal and a network device. The terminal is configured to perform the steps on the terminal side in the foregoing method embodiments. The network device is configured to perform the steps on the network device side in the foregoing method embodiments.

The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used for distinguishing between a plurality of objects, instead of limiting an order, a time sequence, a priority, or importance of the plurality of objects.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, device (system), and computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this way, this application is intended to cover these modifications and variations provided that they fall within the scope of protection defined by the following claims and their equivalent technologies.

## Claims

1. A communication method, wherein the method comprises:
determining predicted values of first-type measurement quantities of a plurality of cells at at least one time point in a first time period, wherein the plurality of cells comprise a serving cell and a candidate cell; and
if the predicted values of the first-type measurement quantities of the plurality of cells at the at least one time point satisfy a reporting condition, sending measurement report information to a network device.

2. The method according to claim 1, wherein the method further comprises:
receiving first information from the network device, wherein the first information indicates to determine, based on the predicted values of the first-type measurement quantities of the plurality of cells, whether to trigger sending of the measurement report information.

3. The method according to claim 1 or 2, wherein determining the predicted values of the first-type measurement quantities of the plurality of cells at the at least one time point comprises:
obtaining the predicted values of the first-type measurement quantities of the plurality of cells at the at least one time point based on an output of a prediction model, wherein
an input of the prediction model comprises historical measurement values of second-type measurement quantities of the plurality of cells, and the output of the prediction model comprises predicted values of the second-type measurement quantities of the plurality of cells at the at least one time point;
an input of the prediction model comprises historical measurement values of second-type measurement quantities of the plurality of cells, and the output of the prediction model comprises the predicted values of the first-type measurement quantities of the plurality of cells at the at least one time point; or
an input of the prediction model comprises historical measurement values of the first-type measurement quantities of the plurality of cells, and the output of the prediction model comprises the predicted values of the first-type measurement quantities of the plurality of cells at the at least one time point.

4. The method according to claim 3, wherein the method further comprises:
receiving second information and/or third information from the network device, wherein
the second information indicates a type of a measurement quantity corresponding to the input of the prediction model and/or a type of a measurement quantity corresponding to the output of the prediction model; and
the third information is for selecting the prediction model from a plurality of models of a terminal.

5. The method according to any one of claims 1 to 4, wherein the measurement report information comprises at least one of the following:
the predicted values of the first-type measurement quantities of the plurality of cells at the at least one time point;
an average predicted value, a maximum predicted value, or a minimum predicted value of the predicted values of the first-type measurement quantities of the plurality of cells at the at least one time point;
the predicted values of the second-type measurement quantities of the plurality of cells at the at least one time point;
an average predicted value, a maximum predicted value, or a minimum predicted value of the predicted values of the second-type measurement quantities of the plurality of cells at the at least one time point; and
an identifier of at least one candidate cell.

6. The method according to claim 5, wherein the method further comprises:
receiving fourth information from the network device, wherein the fourth information indicates content comprised in the measurement report information.

7. The method according to any one of claims 1 to 6, wherein determining the predicted values of the first-type measurement quantities of the plurality of cells at the at least one time point in the first time period comprises:
obtaining, through measurement, measurement values of the first-type measurement quantities of the plurality of cells at a first time point; and
if the measurement values of the first-type measurement quantities of the plurality of cells at the first time point satisfy an entry condition, determining the predicted values of the first-type measurement quantities of the plurality of cells at the at least one time point, wherein
the first time point is before a 1^{st} time point in the at least one time point.

8. The method according to any one of claims 1 to 6, wherein determining the predicted values of the first-type measurement quantities of the plurality of cells at the at least one time point in the first time period comprises:
determining, at a second time point, the predicted values of the first-type measurement quantities of the plurality of cells at the at least one time point, wherein
the second time point is a time point at which measurement is performed on the first-type measurement quantities or the second-type measurement quantities of the plurality of cells, and the second time point is before a 1^{st} time point in the at least one time point.

9. The method according to any one of claims 1 to 8, wherein the method further comprises:
receive fifth information from the network device, wherein the fifth information indicates the at least one time point.

10. The method according to any one of claims 1 to 9, wherein the method further comprises:
receiving sixth information and seventh information from the network device, wherein the sixth information indicates at least one candidate cell for cell handover, and the seventh information indicates to determine, based on predicted values of first-type measurement quantities of the serving cell and the at least one candidate cell at at least one time point in a second time period, whether to perform cell handover.

11. A communication method, wherein the method comprises:
sending first information to a terminal, wherein the first information indicates to determine, based on predicted values of first-type measurement quantities of a plurality of cells at at least one time point in a first time period, whether to trigger sending of measurement report information; and
receiving the measurement report information from the terminal.

12. The method according to claim 11, wherein the method further comprises:
sending second information and/or third information to the terminal, wherein
the second information indicates a type of a measurement quantity corresponding to an input of a prediction model and/or a type of a measurement quantity corresponding to an output of the prediction model, and the third information is for selecting the prediction model from a plurality of models of the terminal; and
the prediction model is for determining the predicted values of the first-type measurement quantities of the plurality of cells at the at least one time point in the first time period.

13. The method according to claim 12, wherein
the input of the prediction model comprises historical measurement values of second-type measurement quantities of the plurality of cells, and the output of the prediction model comprises predicted values of the second-type measurement quantities of the plurality of cells at the at least one time point;
the input of the prediction model comprises historical measurement values of second-type measurement quantities of the plurality of cells, and the output of the prediction model comprises the predicted values of the first-type measurement quantities of the plurality of cells at the at least one time point; or
the input of the prediction model comprises historical measurement values of the first-type measurement quantities of the plurality of cells, and the output of the prediction model comprises the predicted values of the first-type measurement quantities of the plurality of cells at the at least one time point.

14. The method according to any one of claims 11 to 13, wherein the measurement report information comprises at least one of the following:
the predicted values of the first-type measurement quantities of the plurality of cells at the at least one time point;
an average predicted value, a maximum predicted value, or a minimum predicted value of the predicted values of the first-type measurement quantities of the plurality of cells at the at least one time point;
the predicted values of the second-type measurement quantities of the plurality of cells at the at least one time point;
an average predicted value, a maximum predicted value, or a minimum predicted value of the predicted values of the second-type measurement quantities of the plurality of cells at the at least one time point; and
an identifier of at least one candidate cell.

15. The method according to claim 14, wherein the method further comprises:
sending fourth information to the terminal, wherein the fourth information indicates content comprised in the measurement report information.

16. The method according to any one of claims 11 to 15, wherein the method further comprises:
sending fifth information to the terminal, wherein the fifth information indicates the at least one time point.

17. The method according to any one of claims 11 to 16, wherein the method further comprises:
sending sixth information and seventh information to the terminal, wherein the sixth information indicates at least one candidate cell for cell handover, and the seventh information indicates to determine, based on predicted values of first-type measurement quantities of the serving cell and the at least one candidate cell at at least one time point in a second time period, whether to perform cell handover.

18. A communication apparatus, comprising a module configured to perform the method according to any one of claims 1 to 17.

19. A communication apparatus, comprising a processor, wherein the processor is coupled to a memory, the memory stores a computer program, and the processor is configured to invoke the computer program in the memory, to cause the communication apparatus to perform the method according to any one of claims 1 to 17.

20. A communication system, wherein the communication system comprises a network device and a terminal, the terminal is configured to perform the method according to any one of claims 1 to 10, and the network device is configured to perform the method according to any one of claims 11 to 17.

21. A computer-readable storage medium, wherein the storage medium stores a computer program or instructions, and when the computer program or the instructions are executed by a computer, the method according to any one of claims 1 to 17 is implemented.

22. A computer program product, wherein when a computer reads and executes the computer program product, the computer is caused to perform the method according to any one of claims 1 to 17.
